(19) 

Europäisches
Patentamt

European
Patent Office

Office européen
des brevets

(11) **EP 4 343 894 A1**

(12) **EUROPEAN PATENT APPLICATION**
published in accordance with Art. 153(4) EPC

(43) Date of publication:
**27.03.2024 Bulletin 2024/13**

(21) Application number: **22803916.0**

(22) Date of filing: **16.05.2022**

(51) International Patent Classification (IPC):
$H01M\ 4/52$ (2010.01)   $H01M\ 4/48$ (2010.01)
$H01M\ 10/0525$ (2010.01)

(52) Cooperative Patent Classification (CPC):
**C01G 53/00; H01M 4/48; H01M 4/485;
H01M 4/505; H01M 4/52; H01M 4/525;
H01M 10/0525;** Y02E 60/10

(86) International application number:
**PCT/CN2022/093054**

(87) International publication number:
**WO 2022/242596 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.05.2021   CN 202110545464**

(71) Applicants:
• **China Petroleum & Chemical Corporation
Beijing 100728 (CN)**
• **Shanghai Research Institute of Petrochemical
Technology, SINOPEC
Shanghai 201208 (CN)**

(72) Inventors:
• **ZHANG, Tongbao**
**Shanghai 201208 (CN)**
• **ZHANG, Yu**
**Shanghai 201208 (CN)**
• **WANG, Biwei**
**Shanghai 201208 (CN)**
• **ZHU, Ye**
**Shanghai 201208 (CN)**
• **CHEN, Fang**
**Shanghai 201208 (CN)**
• **GAO, Huanxin**
**Shanghai 201208 (CN)**

(74) Representative: **Keil & Schaafhausen
Patentanwälte PartGmbB
Bockenheimer Landstraße 25
60325 Frankfurt am Main (DE)**

(54) **LITHIUM BATTERY POSITIVE ELECTRODE MATERIAL PRECURSOR, PREPARATION METHOD THEREFOR AND APPLICATION THEREOF**

(57)    The present invention discloses a lithium battery positive electrode material precursor and its preparation method and application. The positive electrode material precursor has the chemical formula $Ni_xCo_yM_zT_p(OH)_q$, the positive electrode material precursor contains secondary particles in the form of microspheres formed by agglomeration of primary particles, and the microspheres have a three-layer structure from the inside to the outside, namely an inner core layer, a middle layer and an outermost layer. The ratio of the intensity of the (110) and (102) crystal planes diffraction peaks expressed as peak height in the XRD diffraction pattern of the inner core layer of the microsphere is 1.0-8.0. The positive electrode material prepared by using the positive electrode material precursor has high discharge specific capacity and good cycle stability, and can be used in high-performance lithium batteries.

FIG.4

EP 4 343 894 A1

**Description**

**Cross-references to Related Application**

This application claims the priority of Chinese patent application No.202110545464.0 filed on May 19, 2021and the invention, titled "A positive electrode material precursor and its preparation method and application", the content of which is incorporated herein by reference in their entirety.

**Technical Field**

The present application relates to the field of lithium batteries, and specifically to a lithium battery positive electrode material precursor and its preparation method and application.

**Background Art**

As electric vehicles and mobile terminals continue to gain popularity, shipments of lithium-ion batteries continue to grow. Lithium-ion batteries are mainly composed of key materials such as positive electrodes, negative electrodes, separators and electrolytes. Among them, the positive electrode material determines key indicators such as energy density, cycle life, safety, and cost of lithium-ion batteries, and is a material that is focused on in the research field.

Currently commercialized positive electrode materials mainly include $LiFePO_4$ with olivine structure, $LiMn_2O_4$ with spinel structure, $LiCoO_2$ with layered structure and ternary positive electrode materials with layered structure. Among them, ternary positive electrode materials have comprehensive advantages such as high charge-discharge specific capacity and low cost, and have huge market demand and potential. The main disadvantages of ternary positive electrode materials are that the specific capacity needs to be further improved and there is a problem of rapid capacity decay during cycling. Improving and increasing the specific capacity and cycle stability of ternary positive electrode materials is important for the commercial promotion of these materials. At present, the performance of materials is mainly improved through ion doping and surface coating modification method. There are relatively few studies on improving the cycle stability performance of materials from the perspective of the structure of ternary materials.

The synthesis methods of ternary positive electrode materials include high-temperature solid phase method, co-precipitation method, sol-gel method, spray drying method, combustion method, etc. Among them, preparing precursor materials through a co-precipitation method and then reacting with lithium salts through high-temperature solid phase reaction is the mainstream method for producing ternary positive electrode materials. In the above method, the precursor material prepared by the co-precipitation method determines the electrical properties of the positive electrode material, including charge-discharge specific capacity, charge-discharge efficiency, cycle stability, etc., and is the key to the ternary positive electrode material production method. CN107915263A discloses a method for preparing a ternary positive electrode material precursor using a co-precipitation method, wherein a metal mixed solution of nickel, cobalt and manganese is used as raw material, and the metal source solution, complexing agent ammonia water, and precipitating agent sodium hydroxide are co-flowed into a reaction kettle in a stoichiometric ratio, controlling the temperature at 20-60 °C, the pH value at 11-12, and the rotation speed at 200-500 r/min. The entire reaction is carried out under $N_2$ protection, and a precursor material with a size of 3.5-4.0 $\mu$m is obtained.

The co-precipitation method can produce secondary microspheres formed by the agglomeration of primary particles through the control of process parameters. However, it has always been a problem and challenge to control the morphology of primary particles and the form of agglomeration to improve the performance of materials.

**Summary of the Invention**

The object of the present application is to provide a positive electrode material precursor and its preparation method and application. The positive electrode material precursor has a novel structure and morphology, and its agglomeration form can be well controlled. The positive electrode material prepared therefrom has excellent electrochemical properties, high discharge specific capacity and good cycle stability.

In order to achieve the above object, one aspect of the present application provides a lithium battery positive electrode material precursor with a chemical formula of $Ni_xCo_yM_zT_p(OH)_q$, wherein M is selected from Fe, Cr, Cu, Nd, Ge, Ti, Mg, W, Mo, Nb, Ca, Zn, Sn, Zr, Ga, Mn, Al, V, Sr, Ba, Hf, Ta, Y, La, Ce or combinations thereof, T is selected from F, P, B, N, S or combinations thereof; wherein $0<x\leq1$, $0\leq y<1$, $0\leq z<1$, $0\leq p\leq0.5$, the value of q makes the above chemical formula satisfy the principle of electrical neutrality, the positive electrode material precursor contains secondary particles in the form of microspheres formed by agglomeration of primary particles, and the microspheres have a three-layer structure from the inside to the outside, namely an inner core layer, a middle layer and an outermost layer, wherein in the XRD diffraction pattern of the inner core layer of the microsphere, the ratio of the intensity of the (110) and (102) crystal planes diffraction peaks expressed as peak heights is 1.0-8.0.

In another aspect, the present application provides a method for preparing a lithium battery positive electrode material precursor. The positive electrode material precursor has a chemical formula $Ni_xCo_yM_zT_p(OH)_q$, wherein M is selected from Fe, Cr, Cu, Nd, Ge, Ti, Mg, W, Mo, Nb, Ca, Zn, Sn, Zr, Ga, Mn, Al, V, Sr, Ba, Hf, Ta, Y, La, Ce or combinations thereof, T is selected from F, P, B, N, S or combinations thereof; $0<x\leq1$, $0\leq y<1$, $0\leq z<1$, $0\leq p\leq0.5$, the value of q is such that the above chemical formula satisfies the principle of electrical neutrality,

The method includes the step of mixing and reacting a metal source solution, a precipitating agent solution and a complexing agent solution in a reaction vessel, the metal source includes a Ni source, an optional Co source and an optional M source, and the metal source solution optionally contains a T source, wherein during the reaction step, the concentration of the complexing agent in the reaction system in the reaction vessel has an upward trend, and the change rate of the concentration of the complexing agent has a downward trend.

Preferably, during the reaction step, the concentration of the complexing agent in the reaction system continues to increase at a change rate of greater than 0 and less than or equal to 1 mol/L·h, preferably 0.001-1 mol/L·h, more preferably 0.001-0.5 mol/L·h, and at the same time, the change rate of the concentration of the complexing agent continues to decrease.

In another aspect, a positive electrode material precursor prepared by the method of the present application is provided.

In another aspect, the present application provides a lithium battery positive electrode material, which is obtained through the solid-phase reaction of the positive electrode material precursor of the present application with a lithium source.

In another aspect, the present application provides a lithium battery, comprising a positive electrode, a negative electrode, an electrolyte and a separator, wherein the positive electrode includes the lithium battery positive electrode material of the present application.

The secondary particles of the positive electrode material precursor of the present application have a three-layer structure from the inside to the outside, in which the inner core layer has a specific diffraction peak structure, that is, the ratio of the intensity of the (110) and (102) crystal planes diffraction peaks is 1.0-8.0, preferably 1.2-4.0, more preferably 1.5-3.5. This diffraction peak structure is conducive to the insertion and extraction of lithium ions in the inner core layer, effectively solving the problem of difficulty in utilizing the internal positive electrode active materials, and improving the specific discharge capacity and cycle stability of the positive electrode material. In a preferred embodiment, the secondary particles of the positive electrode material precursor have a specific diffraction peak structure different from its inner core layer, that is, the ratio of the intensity of the (110) and (102) crystal planes diffraction peaks is 0.1-1.5, preferably 0.5-1.5, more preferably 0.7-1.3. This diffraction peak structure has lower activity, which is beneficial to stabilize the interface of the positive electrode material and improving the side reactions between the positive electrode material interface and the electrolyte, thereby further improving the cycle stability of the positive electrode material. The positive electrode material prepared using the positive electrode material precursor is applied in a lithium-ion battery, and the resulting lithium-ion battery has high discharge capacity, good rate performance, and good cycle stability. For example, in Example 1, the first discharge specific capacity of the lithium battery using the obtained positive electrode material at 0.1C rate can reach 215.3 mAh/g, the Coulombic efficiency in the first week can reach 91.2%, and the discharge specific capacity at 1C rate can reach 190.3 mAh/g, the capacity retention rate after 100 cycles at 1C rate can reach 107.6%, showing the comprehensive performance of high discharge specific capacity and good cycle stability.

The positive electrode material precursor preparation method of the present application produces secondary particles with a three-layer structure by finely controlling the concentration of the complexing agent in the reaction system and its change rate, and the secondary particles and/ or its inner core layer have specific positive electrode material precursor with a diffraction peak structure, and a lithium-ion battery using a positive electrode material prepared from the positive electrode material precursor has high discharge capacity, good rate performance, and good cycle stability.

## Description of Figures

The following figures are used to provide a further understanding of the present application and constitute a part of the description. They are used to explain the present application together with the following specific embodiments, but do not constitute a limitation of the present application. Wherein:

Figure 1 is a schematic structural diagram of the positive electrode material precursor provided by the present application;

Figure 2 is an SEM image of the positive electrode material precursor prepared in Example 1 of the present application;

Figure 3 is an SEM image of the cross section of the particles of the positive electrode material precursor prepared in Example 1 of the present application;

Figure 4 is an XRD pattern of the inner core layer of the positive electrode material precursor prepared in Example 1 of the present application;

Figure 5 is an XRD pattern of the positive electrode material precursor prepared in Example 1 of the present application;

Figure 6 is a 0.1C rate first cycle charge-discharge curve of a lithium battery assembled from the positive electrode material prepared in Example 1 of the present application;

Figure 7 is the cycle result of a lithium battery assembled from the positive electrode material prepared in Example 1 of the present application;

Figure 8 is a diagram showing the concentration change of the complexing agent in the reaction system of Example 1 of the present application as a function of reaction time;

Figure 9 is a graph showing the concentration of the complexing agent in the reaction system of Example 7 of the present application as a function of reaction time;

Figure 10 is a graph showing the concentration of the complexing agent in the reaction system of Example 8 of the present application as a function of reaction time;

Figure 11 is an SEM image of the positive electrode material precursor prepared in Comparative Example 1 of the present application;

Figure 12 is the cycle result of a lithium battery assembled from the positive electrode material prepared in Comparative Example 1 of the present application.

## Detailed Description of the Invention

The present application will be further described in detail below through specific embodiments. It should be understood that the specific embodiments described here are only used to illustrate and explain the application, but do not limit the application in any way.

Any specific numerical value disclosed herein, including the endpoints of a numerical range, is not limited to the precise value of that numerical value, but is to be understood to encompass values approaching that precise value. Moreover, for the disclosed numerical range, one or more new numerical value ranges can be obtained by any combination between the endpoint values of the ranges, between the endpoint value and the specific point value within the range, and between each specific point value, these new numerical ranges should also be deemed to be specifically disclosed herein.

Unless otherwise stated, the terms used herein have the same meanings as commonly understood by those skilled in the art. If a term is defined in the present description and its definition is different from the common understanding in the art, the definition in the present description shall prevail.

In the present application, the expression "satisfy the principle of electrical neutrality" means that the algebraic sum of the valences of all elements in the corresponding chemical formula is zero.

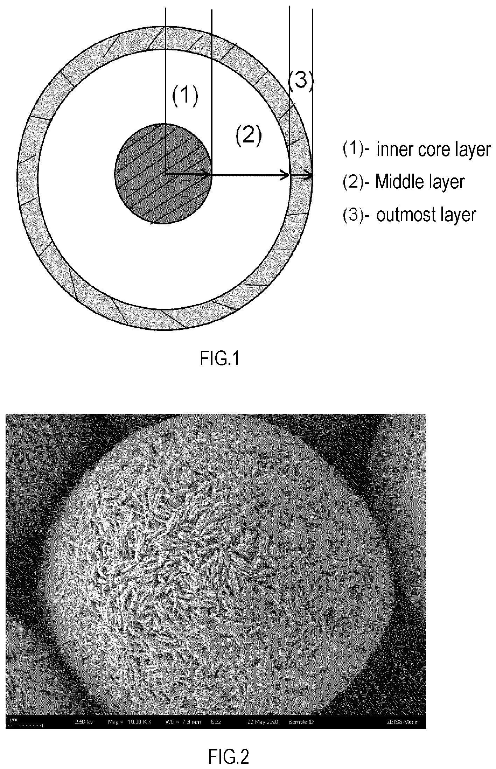

In the present application, the secondary particles in the form of microspheres (also referred to herein as "secondary particle microspheres", "secondary microspheres" or "microspheres") may be spherical or spherical-like, for example ellipsoid shape, the present application does not have strict restrictions on this. The microspheres can be roughly divided into a three-layer structure from the inside to the outside according to different porosity. The schematic diagram is shown in Figure 1, wherein the "inner core layer" refers to the first segment area extending from the center of the microsphere to its outer surface, its porosity is usually in the range of greater than 5% to 15%; the "middle layer" refers to the second segment area wrapping outside the inner core layer and extending from the outer surface of the inner core layer to the outer surface of the microsphere, and its porosity is usually in the range of 0.01-5%; the "outermost layer" refers to the third section wrapping outside the middle layer and extending from the outer surface of the middle layer to the outer surface of the microsphere, and its porosity is usually in the range of 6-30%.

In the present application, the porosities of the inner core layer, of the middle layer and of the outermost layer of the microsphere were measured in the following way: the precursor particles were adhered to the conductive glue and placed on a focused ion beam scanning microscope (FIB-SEM) of the American ThermoFisher Company to perform three-dimensional reconstructed slice imaging, and then Avizo software is used to perform three-dimensional reconstruction and void segmentation processing of the particles, and the porosities of the inner core layer, of the middle layer and of the outermost layer were statistically calculated, wherein the porosity is obtained by dividing the segmented void volume by the total volume of the corresponding area.

In the present application, the XRD diffraction pattern of the secondary particles/microspheres of the positive electrode material precursor is measured in the following way: at the end of the reaction step, the positive electrode material precursor product is taken out, and then washed three times with deionized water, dried and dehydrated in a vacuum drying oven at 120 °C for 6 hours, and the dried product is detected by a German Bruker D8 Advance SS model X-ray diffractometer.

In the present application, the XRD diffraction pattern of the secondary particle/microsphere core layer of the positive electrode material precursor is measured in the following way: 10 g of the positive electrode material precursor product obtained is added to 400 mL hydrochloric acid solution with a concentration of 0.4 mol/L, stirred for 15 minutes, filtered, then washed with deionized water 3 times, dried and dehydrated in a vacuum drying oven at 120 °C for 6 hours to obtain the inner core layer product, and pass the product by a German Bruker D8 Advance SS model X-ray diffractometer.

According to the present application, in the XRD spectrum of the secondary particles/microspheres of the positive electrode material precursor and its inner core layer, the $2\theta$ diffraction peaks located at 56°-61° and 48°-54° respectively correspond to (110) crystal plane and (102) crystal plane. The ratio of the intensity of the (110) and (102) crystal planes diffraction peaks refers to the ratio of the peak height of the (110) crystal plane diffraction peak to the peak height of the (102) crystal plane diffraction peak.

In the present application, the particle size of the secondary particles of the positive electrode material precursor refers to the medium particle size D50 of the secondary microspheres, which can be measured through dynamic light scattering technology, such as through the Mastersizer 3000 Laser Particle Size Analyzer of Malvern Panalytical Company in the United Kingdom.

In the present application, when preparing the lithium battery positive electrode material precursor, when the particle size D50 of the secondary particles of the precursor reaches the target particle size (usually 1-30 $\mu$m, preferably 1-20 $\mu$m, more preferably 1-15 $\mu$m), the reaction can be terminated, and the moment when the reaction is terminated is the moment referred to in the present description as the moment of "end of the reaction step"; accordingly, the "duration of the reaction step" (or "total reaction time") in the present description refers to the time elapsed from the beginning of the reaction (i.e. the moment when the metal source solution, precipitating agent solution and complexing agent solution start to be mixed in the reaction vessel) to the end of the reaction step.

In the present application, the "change rate" of the concentration of the complexing agent in the reaction system refers to the change in the concentration of the complexing agent in the reaction system per unit time, expressed in units of mol/L·h.

In the present application, when preparing the lithium battery positive electrode material precursor, the time period between the $T_0$ moment when the reaction starts and the $T_N$ moment when the reaction step ends (that is, the duration Tt of the reaction step) is evenly divided into N periods, the moment at the end of the first period is recorded as $T_1$, the moment at the end of the second period is recorded as $T_2$, and so on, the concentrations of the complexing agent in the reaction system measured at the moments $T_0$, $T_1$, $T_2$, $T_3$.... and $T_N$ are respectively recorded as $C_0$, $C_1$, $C_2$, $C_3$ ... and $C_N$, and the measured change rates of the concentration of the complexing agent in the reaction system are respectively recorded as $R_0$, $R_1$, $R_2$, $R_3$, ... and $R_N$. If during the reaction step, for at least one integer N greater than or equal to 4 (for example, one, two or more of the integers 4-100, 5-50 or 10-20), the concentration of the complexing agent in the reaction system satisfies $C_0 < C_1 < C_2 < C_3 < ..... < C_N$, it is considered that the concentration of the complexing agent in the reaction system is "on an upward trend". Preferably, in the preparation method of the positive electrode material precursor of the present application, during the entire reaction step, the concentration of the complexing agent in the reaction system continues to rise. At this time, for any integer N greater than or equal to 4, except inevitable disturbances, the concentration of the complexing agent in the reaction system satisfies $C_0 < C_1 < C_2 < C_3 <... < C_N$. Similarly, if during the reaction step, for at least one integer N greater than or equal to 4 (for example, one, two or more of the integers 4-100, 5-50 or 10-20), the change rate of the concentration of the complexing agent in the reaction system satisfies $R_0 > R_1 > R_2 > R_3 >...> R_N$, then the change rate of the concentration of the complexing agent in the reaction system is considered to be "on a downward trend". Preferably, in the positive electrode material precursor preparation method of the present application, during the entire reaction step, the change rate of the concentration of the complexing agent in the reaction system continues to decrease, at this time, for any integer N greater than or equal to 4, except unavoidable disturbance, the change rate of the concentration of the complexing agent in the reaction system satisfies $R_0 > R_1 > R_2 > R_3 >... > R_N$.

In the present application, unless expressly stated, otherwise any matters or items not mentioned shall directly apply to those known in the art without any change. Moreover, any embodiment described herein can be freely combined with one or more other embodiments described herein, and the technical solutions or technical ideas formed thereby are regarded as part of the original disclosures or original records of the present application and shall not be regarded as new matters that have not been disclosed or expected in the present description, unless those skilled in the art believe that the combination is obviously unreasonable.

All patent and non-patent literatures mentioned herein, including but not limited to textbooks and journal articles, are hereby incorporated by reference in their entirety.

In the first aspect, the present application provides a positive electrode material precursor with the chemical formula $Ni_xCo_yM_zT_p(OH)_q$, wherein M is selected from Fe, Cr, Cu, Nd, Ge, Ti, Mg, W, Mo, Nb, Ca, Zn, Sn, Zr, Ga, Mn, Al, V, Sr, Ba, Hf, Ta, Y, La, Ce or combinations thereof, T is selected from F, P, B, N, S or combinations thereof; wherein, $0<x\leq1$, $0\leq y<1$, $0\leq z<1$, $0\leq p\leq0.5$, the value of q makes the above chemical formula satisfy the principle of electrical neutrality, and the positive electrode material precursor includes secondary particles in the form of microspheres formed by the agglomeration of primary particles. The microspheres have a three-layer structure from the inside to the outside, namely an inner core layer, a middle layer and an outermost layer, wherein in the XRD diffraction pattern of the inner core layer of the microspheres, the ratio of the intensity of the (110) and (102) crystal planes diffraction peaks expressed in terms of peak height is 1.0-8.0, preferably 1.2-4.0, more preferably 1.5-3.5, such as 1.5, 2.0, 2.5, 3.0, 3.5, and any value in the range ending at any two of these values.

The inventor of the present application has discovered during research that the specific diffraction peak structure of the inner core layer of the secondary particle microspheres of the positive electrode material precursor of the present application is conducive to the insertion and extraction of lithium ions in the inner core layer, effectively solving the problem of difficulty in utilizing the internal positive electrode active materials, thus improving the discharge specific capacity and rate performance of the positive electrode material, thereby improving the energy density and dynamic performance of lithium-ion batteries.

In a preferred embodiment, the ratio of the intensity of the (110) and (102) crystal planes diffraction peaks expressed as peak heights in the XRD diffraction pattern of the secondary particle microspheres of the positive electrode material precursor is 0.1-1.5, preferably 0.5 -1.5, more preferably 0.7-1.3, for example, 0.8, 0.85, 0.9, 0.95, 1.0, 1.05, 1.1, 1.15, 1.2, 1.25, 1.3, and any value in the range formed by any two of these values as endpoints.

The inventor of the present application has discovered during research that when the secondary particle microspheres of the positive electrode material precursor of the present application have the above-mentioned specific diffraction peak structure, since the activity of the diffraction peak structure is low, it is beneficial to stabilize the interface of the positive electrode material, thus further improve the cycle stability of the positive electrode material.

In a preferred embodiment, the shape of the primary particles of the precursor is at least one selected from the group consisting of sheet, lath, needle, and spindle. Further preferably, the shape of the primary particles of the precursor is sheet-like, and its thickness is 1-200 nm.

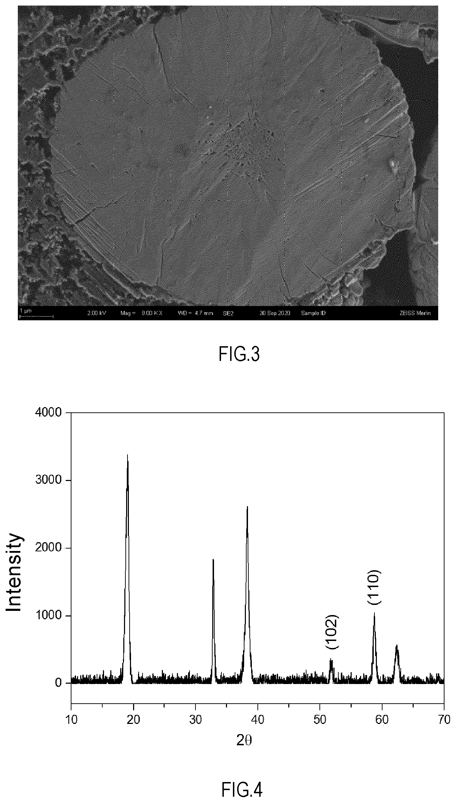

In the present application, the morphology of the positive electrode material precursor is characterized by scanning electron microscopy (SEM). The model of the scanning electron microscope used is ZEISS Merlin (ZEISS Company, Germany). Through the SEM images of the positive electrode material precursor (as shown in Figure 2 and Figure 3), it can be observed that the positive electrode material precursor provided in the present application has a microsphere morphology, the microspheres are formed by agglomeration of flaky primary particles and have a three-layer structure from the inside to the outside, namely an inner core layer, a middle layer and an outermost layer.

Further, through the SEM images of the positive electrode material precursor (as shown in Figure 2 and Figure 3), the density of primary particle agglomeration in the inner core layer, the middle layer and the outermost layer of the microspheres can also be observed, and this density can be characterized by the porosity of each layer (the lower the porosity, the higher the density), and then the thickness of the inner core layer, middle layer and outermost layer can be measured.

In a preferred embodiment, the porosity of the inner core layer is in the range of greater than 5% to 15%, the porosity of the middle layer is in the range of 0.01-5%, and the porosity of the outermost layer is in the range of 6-30% range. Further preferably, the porosities of the inner core layer, of the middle layer and of the outermost layer of the microsphere satisfy the following relationship: middle layer < inner core layer ≤ outermost layer.

In a further preferred embodiment, in the microsphere, based on 100% of the total thickness of the three-layer structure, the thickness of the inner core layer accounts for 0. 1%-50%, and the thickness of the middle layer accounts for 40%-95%, the thickness of the outermost layer accounts for 0. 1%-20%. Preferably, the inner core layer thickness accounts for 5%-40%, the middle layer thickness accounts for 50%-85%, and the outermost layer thickness accounts for 1%-15%.

For example, it can be observed from the SEM images of the positive electrode material precursor shown in Figures 2 and 3 that the inner core layer of the secondary particles in the form of microspheres of the precursor is formed by agglomeration of flaky primary particles, and the agglomeration is relatively loose, the thickness of the inner core layer is about 1.2 µm, and the outermost layer is also formed by the agglomeration of flaky primary particles, the agglomeration is looser than the inner core layer. The thickness of the outermost layer is about 0.25 µm, the middle layer between the inner core layer and the outermost layer is agglomerated very densely, and the thickness of the middle layer is about 3.7 µm.

The inventor of the present application has found in the research that the inner core layer has a lower density (i.e. a higher porosity), which can further reduce the resistance to the insertion and extraction of lithium ions in the core layer, and at the same time can effectively buffer the volume changes of the positive active material during charging and discharging, and inhibit the cracking and shattering problems caused by volume expansion and contraction of the positive active material during charging and discharging. The middle layer has the highest density, which can not only effectively wrap the highly active core layer structure, improve the cycle stability of the positive electrode material, but also effectively increase the tap density of the positive electrode active material. The outermost layer has the lowest density and can quickly embed external lithium ions into the bulk phase of the positive electrode material, effectively reducing the interface resistance of the positive electrode material and improving the rate performance of the positive electrode active material.

In a preferred embodiment, the particle size D50 of the secondary particles of the precursor is 1-30 $\mu$m, preferably 1-20 $\mu$m, and more preferably 1-15 $\mu$m.

In a preferred embodiment, in the chemical formula of the positive electrode material precursor, M is selected from Fe, Cr, Cu, Ti, Mg, W, Mo, Nb, Ce, Nd, Ca, Zn, Sn, Zr, Ga, Hf, Mn, Al, or combinations thereof, preferably selected from Mn, Al, Ti, Mg, Cr, Hf, Nb, Ce, Nd, or combinations thereof, more preferably combination of at least one of Mn, Al, or combination of Mn and Al with at least one selected from Ti, Mg, Cr, Hf, Nb, Ce and Nd.

In a preferred embodiment, in the chemical formula of the positive electrode material precursor, T is selected from F, P, B, or combinations thereof, and is more preferably B or F.

In a preferred embodiment, in the chemical formula of the positive electrode material precursor, x satisfies $0<x<1$, preferably $0.2<x<1$, and more preferably $0.5<x<0.95$.

In a preferred embodiment, in the chemical formula of the positive electrode material precursor, y satisfies $0<y<1$, preferably $0<y<0.5$, and more preferably $0<y<0.25$.

In a preferred embodiment, in the chemical formula of the positive electrode material precursor, z satisfies $0<z<1$, preferably $0<z<0.5$, and more preferably $0<z<0.25$.

In a preferred embodiment, in the chemical formula of the positive electrode material precursor, p satisfies $0\leq p\leq0.5$, preferably $0\leq p\leq0.3$, and more preferably $0\leq p\leq0.1$.

In certain further preferred embodiments, M is selected from Mn and/or Al. Particularly preferably, the chemical formula of the positive electrode material precursor is $Ni_xCo_yMn_z(OH)_2$ or $Ni_xCo_yAl_z(OH)_2$, wherein $0.5 < x < 0.95$, $0 < y < 0.25$, $0 < z < 0.25$, and $x+y+z=1$.

In the second aspect, the present application provides a method for preparing a lithium battery positive electrode material precursor, wherein the positive electrode material precursor has a chemical formula of $Ni_xCo_yM_zT_p(OH)_q$, wherein M is selected from Fe, Cr, Cu, Nd, Ge, Ti, Mg, W, Mo, Nb, Ca, Zn, Sn, Zr, Ga, Mn, Al, V, Sr, Ba, Hf, Ta, Y, La, Ce or combinations thereof, T is chosen from F, P, B, N, S or combinations thereof; $0<x\leq1$, $0\leq y<1$, $0\leq z<1$, $0\leq p\leq0.5$, the value of q makes the above chemical formula satisfy electrical neutrality principles.

The method includes the step of mixing and reacting a metal source solution, a precipitating agent solution and a complexing agent solution in a reaction vessel, wherein the metal source includes a Ni source, an optional Co source and an optional M source. The metal source solution optionally contains a T source, wherein during the reaction step, the concentration of the complexing agent in the reaction system in the reaction vessel has an upward trend, and the change rate of the concentration of the complexing agent has a downward trend.

In a preferred embodiment, during the reaction step, the concentration of the complexing agent in the reaction system continues to increase at a change rate of greater than 0 and less than or equal to 1 mol/L·h, preferably 0.001-1 mol/L·h, more preferably 0.001-0.5 mol/L·h, and at the same time, the change rate of the concentration of the complexing agent continues to decrease.

In a further preferred embodiment, during the reaction step, the change rate of the concentration of the complexing agent and the reaction time t generally satisfy a monotonic decreasing functional relationship. The present application does not strictly limit the specific form of this functional relationship, as long as it can be satisfied so that the change rate decreases with the increase of reaction time t, and the value is within the required range (i.e. greater than 0 and less than or equal to 1 mol/L·h, preferably 0.001-1 mol/L·h, more preferably, 0.001-0.5 mol/L·h).

In certain particularly preferred embodiments, during the reaction step, the functional relationship f(t) between the change rate of the concentration of the complexing agent and the reaction time t can be expressed as

$$f(t) = \frac{b}{(a+t)^c}$$

, wherein $a>0$, $b > 0$, $c>1$, and the values of a, b and c satisfy $\frac{b}{(a)^c}\leq1$, the unit of the change rate f(t) of the concentration of the complexing agent is mol/L·h, and the unit of the reaction time t is h. Particularly preferably, in the functional relationship, $c =2$, $0<b\leq5$, $0.5\leq a\leq8$, and the values of a and b satisfy $\frac{b}{(a)^2}\leq1$.

In a preferred embodiment, the concentration of the complexing agent at the end of the reaction step is controlled to be in the range of 0.05-2.0 mol/L, preferably in the range of 0.2-1.4 mol/L, and more preferably in the range of 0.5-1.2 mol/L.

In a further preferred embodiment, the duration of the reaction step (i.e., the total reaction time) is recorded as Tt, and the concentration of the complexing agent in the reaction system is controlled to reach 80% of the concentration of the complexing agent at the end of the reaction step within the time period of 0 to 1/4 Tt.

In a further preferred embodiment, the duration of the reaction step is recorded as Tt. During the first 1/8 Tt of the reaction (i.e., within the time period from 0 to 1/8 Tt), the change rate of concentration of the complexing agent in the reaction system is controlled is not less than 0.021 mol/L·h, preferably 0.021-1 mol/L·h, further preferably 0.021-0.5 mol/L·h, such as 0.021 mol/L·h, 0.026 mol/L·h, 0.031 mol/L·h, 0.036 mol/L·h, 0.041 mol/L·h, 0.046 mol/L·h, 0.5 mol/L·h and any value in the range ending at any two of these numeral values. Using this preferred embodiment, the discharge capacity, rate performance and cycle stability of the prepared positive electrode material precursor can be significantly improved.

In a further preferred embodiment, the duration of the reaction step is recorded as Tt, and within 1/12 Tt before the end of the reaction step (i.e., within the time period from 11/12 Tt to Tt ), the complexing agent in the reaction system is controlled The concentration change rate is lower than 0.005 mol/L·h, preferably 0.001-0.005 mol/L·h, for example, 0.001 mol/L·h, 0.0015 mol/L·h, 0.002 mol/L·h, 0.0025 mol/L·h, 0.003 mol/L·h, 0.0035 mol/L·h, 0.004 mol/L·h, 0.0045 mol/L·h, 0.005 mol/L·h and any value in the range ending at any two of these numeral values. Using this preferred embodiment, the cycle stability of the prepared positive electrode material precursor can be significantly improved.

Through in-depth research on the precipitation reaction process used to prepare the positive electrode material precursor, the inventor of the present application has found that by controlling the concentration of the complexing agent and the change rate of the concentration of the complexing agent in the reaction system, it is possible to obtain precursor secondary particles in the form of microspheres formed by the agglomeration of primary particles can be obtained, and at the same time, the agglomeration form of the primary particles is controlled to make the inner core layer of the secondary particle microspheres agglomerate relatively loosely, the middle layer agglomerate very densely, and the outermost layer agglomerate relatively loosely, and the secondary particle microspheres and/or their inner core layer can also be controlled to exhibit a specific diffraction peak structure, thereby enabling the resulting positive electrode material precursor to have a higher specific discharge capacity and better cycle stability.

In a preferred embodiment, the metal source solution contains a T source, or the method further includes adding a T source to the reaction system during the reaction step. Further preferably, the molar ratio of the nickel source, cobalt source, M source calculated on basis of metal elements and the T source calculated as T element is (0-1): (0-1): (0-1): (0-0.5), provided that the molar amount of nickel source is not 0, preferably (0.2-1): (0-0.5): (0-0.5): (0-0.3), more preferably (0.5-0.95): (0-0.25): (0-0.25): (0-0.1).

In a preferred embodiment, in the chemical formula of the positive electrode material precursor, M is selected from Fe, Cr, Cu, Ti, Mg, W, Mo, Nb, Ce, Nd, Ca, Zn, Sn, Zr, Ga, Hf, Mn, Al, or combinations thereof, preferably selected from Mn, Al, Ti, Mg, Cr, Hf, Nb, Ce, Nd, or combinations thereof, more preferably Mn, Al, or a combination of at least one selected from Mn and Al and at least one selected from Ti, Mg, Cr, Hf, Nb, Ce and Nd.

In a preferred embodiment, in the chemical formula of the positive electrode material precursor, T is selected from F, P, B, or combinations thereof, and is more preferably B or F.

In a preferred embodiment, in the chemical formula of the positive electrode material precursor, x satisfies $0<x<1$, preferably $0.2<x<1$, and more preferably $0.5<x<0.95$.

In a preferred embodiment, in the chemical formula of the positive electrode material precursor, y satisfies $0<y<1$, preferably $0<y<0.5$, and more preferably $0<y<0.25$.

In a preferred embodiment, in the chemical formula of the positive electrode material precursor, z satisfies $0<z<1$, preferably $0<z<0.5$, and more preferably $0<z<0.25$.

In a preferred embodiment, in the chemical formula of the positive electrode material precursor, p satisfies $0\leq p\leq 0.5$, preferably $0\leq p\leq 0.3$, and more preferably $0\leq p\leq 0.1$.

In certain further preferred embodiments, M is selected from Mn and/or Al. Particularly preferably, the chemical formula of the positive electrode material precursor is $Ni_xCo_yMn_z(OH)_2$ or $Ni_xCo_yAl_z(OH)_2$, wherein $0.5 < x < 0.95$, $0 < y < 0.25$, $0 < z < 0.25$, and $x+y+z = 1$.

In the present application, there is no particular restrictions on the type of the metal source, its specific examples include, but are not limited to, sulfates, nitrates, acetates, oxalates, hydrochlorides of the corresponding metals, or combinations thereof.

In the present application, there is no particular restrictions on the type of the nickel source (i.e. Ni source). Preferably, the nickel source is at least one selected from nickel sulfate, nitrate, acetate, oxalate and hydrochloride, more preferably, the nickel source is at least one selected from nickel sulfate, nickel nitrate, nickel acetate, nickel oxalate and nickel chloride.

In the present application, there is no particular restrictions on the type of the cobalt source (i.e., Co source). Preferably, the cobalt source is at least one selected from the group consisting of cobalt sulfate, nitrate, acetate, oxalate and hydrochloride, more preferably, the cobalt source is at least one selected from cobalt sulfate, cobalt nitrate, cobalt acetate and cobalt chloride.

In the present application, there is no particular restrictions on the type of M source. Preferably, the M source is at least one selected from sulfate, nitrate, acetate, oxalate and hydrochloride of M, more preferably, it is at least one of manganese sulfate, manganese nitrate, manganese acetate, manganese chloride, aluminum nitrate, chromium nitrate, magnesium nitrate, hafnium nitrate, niobium nitrate, cerium nitrate, neodymium nitrate, aluminum chloride, aluminum acetate, aluminum sulfate, zinc sulfate, magnesium sulfate and titanium sulfate.

In a preferred embodiment, calculated on basis of metal elements, the molar concentration of the metal source solution is 0.01-5.0 mol/L, for example, it can be 0.01 mol/L, 0.1 mol/L, 0.5 mol/L, 1.0 mol/L, 2.0 mol/L, 3.0 mol/L, 4.0 mol/L, 5.0 mol/L, and any value in the range formed by any two of these values as endpoints, more preferably 0.01-4.0 mol/L, more preferably, it is 0.5-4.0 mol/L.

In the present application, there is no particular restrictions on the type of the precipitating agent, as long as the metal source can carry out the precipitation reaction. Preferably, the precipitating agent is selected from the group consisting of alkali metal hydroxides, carbonates and bicarbonates, or combinations thereof, the alkali metal is preferably selected from Na, K and Li, or combinations thereof; more preferably, the precipitating agent is selected from sodium hydroxide, sodium carbonate, sodium bicarbonate, potassium hydroxide, potassium carbonate, potassium bicarbonate, lithium hydroxide, lithium carbonate, lithium bicarbonate, or combinations thereof. In the examples of the present application, sodium hydroxide is taken as an example for illustrative explanation, and the present application is not limited thereto.

In the present application, there is no particular restrictions on the concentration of the precipitating agent solution. Preferably, the concentration of the precipitating agent solution is 0.01-16.0 mol/L, for example, it can be 0.01 mol/L, 0.02 mol/L, 0.1 mol/L, 0.5 mol/L, 1.0 mol/L, 2.0 mol/L, 3.0 mol/L, 4.0 mol/L, 5.0 mol/L, 6.0 mol/L, 7.0 mol/L, 8.0 mol/L, 9.0 mol/L, 10.0 mol/L, 11.0 mol/L, 12.0 mol/L, 13.0 mol/L, 14.0 mol/L, 15.0 mol/L, 16.0 mol/L, and any value in the range formed by any two of these values as the endpoints, preferably 2-12.0 mol/L.

In the present application, there is no particular restrictions on the type of the complexing agent, as long as it can form a complex with Ni, Co and M in an aqueous solution; preferably, the complexing agent is selected from ammonium ion donors, alcoholamine complexing agents, aminocarboxylic acid complexing agents, hydroxylaminocarboxylic acid complexing agents, carboxylate complexing agents, thiocyanate complexing agents, or combinations thereof, it is preferably ammonium ion donors.

In a preferred embodiment, the ammonium ion donor is selected from ammonia water, ammonium oxalate, ammonium carbonate, ammonium hydroxide, or combinations thereof. In the examples of the present application, ammonia water is taken as an example for illustrative explanation, and the present application is not limited thereto.

In a preferred embodiment, the alcoholamine complexing agent is selected from ethanolamine, diethanolamine, 2-dibutylaminoethanol, 2-diethylaminoethanol, N,N-diethylethanolamine, or combinations thereof.

In a preferred embodiment, the aminocarboxylic acid complexing agent is selected from sodium nitrilotriacetate (NTA), potassium nitrilotriacetate, ethylenediaminetetraacetic acid and its salts (EDTA), diethylenetriaminepentacetic acid (DTPA), or combinations thereof.

In a preferred embodiment, the hydroxylaminocarboxylic acid complexing agent is selected from hydroxyethylenediaminetetraacetic acid (HEDTA) and its salts, ethylene glycol bis($\beta$-diaminoethyl)ethyl ether-N,N, N'N'-tetraacetic acid (EGTA) and its salts, dihydroxyglycine and its salts, or combinations thereof.

In a preferred embodiment, the carboxylate complexing agent is selected from the group consisting of oxalic acid and its salts, tartaric acid and its salts, citric acid and its salts, gluconic acid and its salts, carboxymethylhydroxymalonic acid (CMOM) and its salts, carboxymethylhydroxysuccinic acid (CMOS) and its salts, hydroxyethylaminoacetic acid (DHEG) and its salts, or combinations thereof.

In a preferred embodiment, the thiocyanate complexing agent is selected from sodium thiocyanate, potassium thiocyanate, ammonium thiocyanate, calcium thiocyanide, zinc thiocyanide, or combinations thereof.

In the present application, there is no special restrictions on the concentration of the complexing agent solution. Preferably, the concentration of the complexing agent solution is 0.01-16.0 mol/L, for example, it can be 0.01 mol/L, 0.1 mol/L, 0.5 mol/L, 1.0 mol/L, 2.0 mol/L, 3.0 mol/L, 4.0 mol/L, 5.0 mol/L, 6.0 mol/L, 7.0 mol/L, 8.0 mol/L, 9.0 mol/L, 10.0 mol/L, 11.0 mol/L, 12.0 mol/L, 13.0 mol/L, 14.0 mol/L, 15.0 mol/L, 16.0 mol/L and any value in the range formed by any two of these values as the endpoints, further preferably 2.0-15.0 mol/L.

In a preferred embodiment, before adding the metal source solution, precipitating agent solution and complexing agent solution to the reaction vessel, the bottom liquid is added to the reaction vessel. Preferably, the bottom liquid is water or an aqueous solution containing a complexing agent; the volume of the bottom liquid is 0-100% of the volume of the reaction vessel, preferably 0-80%, and further preferably 10-60%. The concentration of the complexing agent in the bottom liquid is 0-1.8 mol/L, preferably 0.05-1.5 mol/L, and further preferably 0.1-1.0 mol/L.

In a further preferred embodiment, the concentration of the complexing agent in the bottom liquid is lower than the concentration of the complexing agent in the reaction system at the end of the reaction step by at least 0.05 mol/L, preferably at least 0.1 mol/L, for example, 0.1-0.7 mol/L.

In the present application, in order to promote the full progress of the reaction between the metal source solution, the precipitating agent solution and the complexing agent solution, the conditions for the precipitation reaction include: the temperature is 20-70°C, preferably 45-60°C; the pH value is 8-14, preferably 10-12; the total reaction time Tt is not less than 10h, preferably 12-96h, more preferably 12-48h; the precipitation reaction is carried out under stirring conditions, and the stirring speed is 50-1200 r/min, for example, it can be 50 r/min, 80 r/min, 100 r/min, 200 r/min, 300 r/min, 400 r/min, 500 r/min, 600 r/min, 700 r/min, 800 r/min, 900 r/min, 1000 r/min or 1200 r/min, preferably 600-1200 r/min.

According to the present application, during the reaction step, the pH of the reaction system can be controlled to remain constant, or can be controlled to vary within the above-mentioned range according to the product target. In a preferred embodiment, the pH of the reaction system remains constant during the reaction step.

In a particularly preferred embodiment, the method of the present application includes the following steps:

(1) add bottom liquid to the reaction vessel;

(2) add the metal source solution optionally containing T source, precipitating agent solution and complexing agent solution into the reaction vessel, to make them mix and react;

wherein the duration of reaction step (2) is recorded as $T_t$, it is controlled so that within the time range from 0 to $1/4T_t$, the concentration of the complexing agent in the reaction system reaches no less than 80% of the concentration of the complexing agent at the end of the reaction step, and during the entire reaction step, the concentration of the complexing agent in the reaction system is controlled to continuously increase, the change rate of the concentration of the complexing agent continues to decrease, and the change rate of the concentration of the complexing agent is controlled in the range of greater than 0 to 1 mol/L·h, preferably in the range of 0.001-1 mol/L h, further preferably in the range of 0.001-0.50 mol/L·h, even more preferably in the range of 0.001-0.20 mol/L·h;

(3) subject the product obtained in step (2) to solid-liquid separation and drying to obtain the positive electrode material precursor.

In the present application, there is no particular restrictions on the solid-liquid separation described in step (3), as long as the reaction product obtained after the precipitation reaction can be separated, for example, filtration or centrifugation can be used.

In the present application, preferably, the product obtained by the solid-liquid separation in step (3) is washed, wherein the washing solvent is preferably water, and further preferably the washing solvent is hot water with a temperature of 30-90 °C.

In the present application, the drying method in step (3) can be a conventional method in this field, such as vacuum drying, freeze drying, air drying or oven drying..., and vacuum heating drying is preferred. There are no special requirements for the drying temperature and time, as long as the washed product can be dried, for example, the vacuum heating drying temperature is 50-150 °C and the time is 4-24 hours.

In the third aspect, the present application provides a positive electrode material precursor prepared by the method of the second aspect. The properties of the positive electrode material precursor have been described in detail in the first aspect and will not be repeated here.

In the fourth aspect, the present application provides a positive electrode material, which includes a solid-phase reaction product of a lithium source and the positive electrode material precursor described in the first or third aspect.

In a preferred embodiment, the positive electrode material is obtained by mixing the positive electrode material precursor and a lithium source and performing a sintering process.

In the present application, there is no particular restrictions on the mixing mode of the positive electrode material precursor and the lithium source, as long as uniform mixing can be ensured. Preferably, the mixing can be achieved by using a high-speed mixer, ball mill, etc. The mixed materials are sintered in an atmosphere furnace, and the sintering atmosphere can be at least one of air, oxygen, and an inert atmosphere such as nitrogen.

In a preferred embodiment, calculated on basis of metal elements, the molar ratio of the lithium source to the battery positive electrode material precursor is 0.9-1.3:1, for example, 0.9, 0.95, 1.00, 1.05, 1.10, 1.15, 1.20, 1.30, and any value in a range ending at any two of these values.

In the present application, the lithium source may exist in the form of a lithium salt, and the lithium salt is preferably at least one selected from lithium nitrate ($LiNO_3$), lithium chloride (LiCl), lithium carbonate ($Li_2CO_3$), and lithium hydroxide (LiOH), lithium oxide ($Li_2O$), lithium phosphate ($Li_3PO_4$), lithium dihydrogen phosphate ($LiH_2PO_4$), and lithium acetate ($CH_3COOLi$).

In the fifth aspect, the present application provides a lithium-ion battery (also referred to as a "lithium battery" herein), which includes the positive electrode material described in the fourth aspect.

The inventor of the present application has found during research that using the positive electrode material provided by the present application in a lithium-ion battery can improve the specific discharge capacity, rate performance and cycle stability of the lithium-ion battery.

The lithium ion battery provided in the present application may have a structure well known to those skilled in the art. Generally speaking, the lithium ion battery includes a positive electrode, a negative electrode, an electrolyte and a separator. The positive electrode and the negative electrode may be prepared by coating and drying a positive electrode compound containing a positive electrode material or a negative electrode compound containing a negative electrode material on respective current collectors.

In the present application, the positive electrode compound can be prepared by using positive electrode materials, conductive agents, binders and solvents.

In the present application, there are no special restrictions on the conductive agent used in the positive electrode compound, as long as it has conductivity and remains stable in the charge-discharge stage. Preferably, the conductive agent is at least one selected from acetylene black, Ketjen black, artificial graphite, natural graphite, carbon tubes, graphene, superconducting carbon, carbon nanofibers, carbon dots, aluminum powder, nickel powder, titanium oxide and conductive polymer.

In the present application, there is no particular restrictions on the binder used in the positive electrode compound, as long as it can provide a bonding effect between the positive electrode material, the conductive agent and the current collector. Preferably, the binder is at least one selected from polyvinylidene fluoride (PVDF), polyvinyl alcohol (PVA), sodium carboxymethylcellulose (CMC), styrene-butadiene rubber (SBR), water-based acrylic resin, polytetrafluoroethylene (PTFE), polyvinyl butyral (PVB), ethylene-vinyl acetate (EVA), vinylidene fluoride-tetrafluoroethylene-propylene terpolymer, vinylidene fluoride-hexafluoroethylene-tetrafluoroethylene terpolymer, tetrafluoroethylene-hexafluoropropylene copolymer and fluorine-containing acrylic resin.

In the present application, there is no particular restrictions on the positive electrode current collector, as long as it has appropriate conductivity. Preferably, the material of the positive electrode current collector can be aluminum, nickel, copper, titanium, silver, stainless steel and carbon materials. The positive electrode current collector can be processed into form of foil, sheet, film, mesh, hole, non-woven fabric, etc..

In a preferred embodiment, the solvent used in the positive electrode compound may be N-methylpyrrolidone.

In the present application, the negative electrode compound can be prepared by using negative electrode materials, conductive agents, binders and solvents.

In the present application, there is no particular restrictions on the type of negative electrode material, and those skilled in the art can select it according to actual needs. Preferably, the negative electrode material is at least one selected from artificial graphite, natural graphite, soft carbon, hard carbon, mesophase microspheres (MCMB), carbon fiber, lithium metal, silicon, silicon oxide, lithium metal alloy and lithium titanate.

In the present application, there are no special restrictions on the conductive agent and binder used in the negative electrode compound. Preferably, the type and amount of conductive agent and binder used in the negative electrode compound can be the same as those used in preparing the positive electrode compound.

In a preferred embodiment, the solvent used in the negative electrode compound may be water.

In the present application, there is no particular restrictions on the negative electrode current collector, as long as it has appropriate conductivity. Preferably, the material of the negative electrode current collector can be aluminum, nickel, copper, titanium, silver, stainless steel and carbon materials, and the negative electrode current collector can be processed into form of foil, sheet, film, mesh, hole, non-woven fabric, etc.

In the present application, the electrolyte may be a solid electrolyte, such as a polymer electrolyte, an inorganic solid electrolyte, etc.; it may also be a liquid electrolyte.

In a preferred embodiment, the polymer electrolyte is at least one selected from polyvinyl alcohol, phosphate ester polymers, polyvinylidene fluoride, polyoxyethylene derivatives, polyoxypropylene derivatives, polyethylene derivatives and polyester sulfides.

In a preferred embodiment, the inorganic solid electrolyte is selected from $Li_2S$, $Li_2S\text{-}P_2S_5$, LiI, Li-La-Zr-O, Li-Ge-V-O, $Li_3N$, $Li_4SiO_4$, LiPON, LISION, Li-Al-Ti-P, $Li_3PO_4\text{-}Li_2S\text{-}SiS_2$, $LiBH_4$, $LiBH_4\text{-}LiX$ (X=Cl, Br or I ) , $LiBH_4\text{-}LiNH_2$, $LiNH_2$, $Li_3AlH_6$, $Li_2NH$ or $Li_2O\text{-}B_2O_3\text{-}P_2O_5$.

In the present application, the liquid electrolyte is a solution of lithium salt in a solvent. The solvent can be a non-aqueous solvent, preferably at least one selected from ethylene carbonate (EC), diethyl carbonate (DEC), and ethyl methyl carbonate (EMC), propylene carbonate (PC), ethyl propyl carbonate (EPC), dimethyl carbonate (DMC), dipropyl carbonate (DPC), methyl propyl carbonate (MPC), methyl formate (MF), ethyl formate (Eft), methyl acetate (MA), ethyl acetate (EA), propyl acetate (PA), methyl propionate (MP), ethyl propionate (EP), propyl propionate (PP), methyl butyrate (MB), ethyl butyrate (EB) and propyl butyrate (BP).

In a preferred embodiment, the lithium salt in the liquid electrolyte is at least one selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bistrifluoromethanesulfonyl imide (LiTFSI), lithium trifluoromethanesulfonate (LiTFS), lithium difluoroxalate borate (LiDFOB), lithium bisoxalate borate (LiBOB), lithium difluorophosphate ($LiPO_2F_2$), lithium difluorooxalate phosphate (LiDFOP), and lithium tetrafluorooxalate borate (LiTFOP).

In the present application, in order to improve the performance of the lithium-ion battery, additives can be selectively added to the liquid electrolyte. The additive is preferably at least one selected from vinylene carbonate (VC), fluoroethylene carbonate (FEC), difluoroethylene carbonate (DFEC), tris(trimethylsilane)phosphate (TMSP), sulfonate cyclic Quaternary ammonium salt, ethylene sulfite (DTO), dimethyl sulfite (DMS), 1-propene-1,3-sultone (PST), 4-propyl ethylene sulfate (PEGLST), diethyl sulfite (DES), adiponitrile (ADN), succinonitrile (SN), 1,3-propane sultone (1,3-PS), vinyl sulfate (DTD) and ethylene 4- methyl sulfate (PCS).

In the present application, the separator is disposed between the positive and negative electrodes to isolate the positive and negative electrodes. The separator can be various separators commonly used in this field, preferably, the separator can be polyolefins, such as polyethylene, polypropylene, polyethylene and polypropylene composites, or it can be a sheet and non-woven fabrics made of glass fiber, etc. When a solid electrolyte is used, the solid electrolyte can also be used as a separator.

The present application has no special restrictions on the preparation method of the lithium-ion battery, and it can be prepared by conventional methods in the art. Preferably, the preparation method of the lithium-ion battery includes: mixing the positive electrode material, conductive agent, binder and solvent evenly and then coating it on at least one surface of the positive electrode current collector, drying, rolling, slicing and using it as a positive electrode; mixing the negative electrode material, conductive agent, binder and solvent evenly and then coating it on at least one surface of the negative electrode current collector, drying, rolling, slicing and using it as a negative electrode; assembling the positive electrode, separator, and the negative electrode into a laminated or wound battery core, placing the battery core in a casing, injecting liquid electrolyte and then encapsulating it to obtain a lithium-ion battery.

In the present application, there is no particular restrictions on the amount of the positive / negative electrode material, conductive agent, and binder. Preferably, based on the weight of the solid component of the positive electrode or negative electrode compound, the mass content of the positive electrode material or the negative electrode material is 50-99wt%, the mass content of the conductive agent is 0.5-25wt%, and the mass content of the binder is 0.5-25wt%.

## Example

The present application will be further described below by means of examples, but the present application is not subject to any limitation thereby. In the following examples and comparative examples:

The molar ratio of each element in the positive electrode material precursor was measured by an Inductively Coupled Plasma Spectrometer (ICP-OES) of the Varian 725 ES model from Agilent Company in the United States;
Scanning Electron Microscopy (SEM) images were obtained by using a ZEISS Merlin model scanning electron microscope from ZEISS Company in Germany;
The X-ray diffraction pattern (XRD) was measured by a D8 Advance SS model X-ray Diffractometer from German Bruker, with a scanning range of 10 ° -70 ° and a scanning speed of 5 ° /min;
The medium particle size D50 was obtained through the Mastersizer 3000 Laser Particle Size Analyzer from the British Malvern Panalytical Company. During the particle size measurement process, water was used as the dispersion medium, and the precursor product was added under stirring, so that the opacity of the slurry was about 9%. The particle size was measured 3 times to take the average.

In the following examples and comparative examples, the raw materials involved are all commercially available unless otherwise stated.

## Example 1

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 2 mol/L was prepared, wherein the molar ratio of nickel, cobalt and manganese in the metal source solution was 8:1:1, and nickel sulfate, cobalt sulfate and manganese sulfate were used in the preparation method; a NaOH solution with a concentration of 6 mol/L was prepared; a complexing agent ammonia solution was prepared, in which the concentration of ammonia was 6 mol/L.

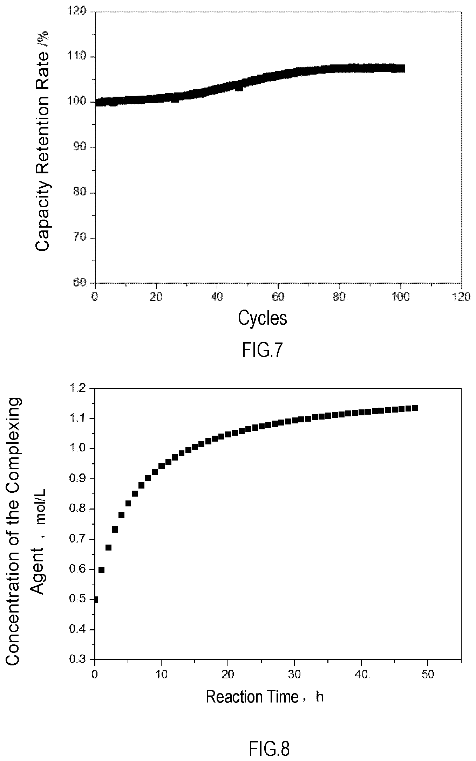

The prepared metal source solution, NaOH solution and complexing agent solution were added to the reaction kettle at the same time under stirring to conduct a precipitation reaction, wherein an ammonia solution accounting for 30% of the kettle volume was previously added to the reaction kettle and the concentration of ammonia was 0.5 mol/L. The initial volume flow rate ratio of the metal source solution to the complexing agent solution was controlled to 3, then the flow rate of the metal source solution was kept unchanged, the feed flow rate of the complexing agent was controlled, so that the concentration of the complexing agent in the system continues to increase, and the change rate of the concentration of the complexing agent continues to decrease. The change of the concentration of the complexing agent in the system with the reaction time is shown in Figure 8, wherein the change rate of the concentration of the complexing agent satisfies the functional relationship $f(t)= 4/(6+t)^2$. The reaction temperature was 55 °C, the total reaction time was 48h, the stirring speed during the reaction was 800rpm, and the flow rate of the NaOH solution was controlled so that the pH value of the reaction system was maintained near 11.2 throughout the reaction. Wherein, the concentration of ammonia in the reaction system at the beginning of the reaction was 0.5 mol/L, and the change rate of the concentration of ammonia was 0.111 mol/L·h; the concentration of ammonia in the reaction system at the 6th hour was 0.85 mol/L, and the change rate of the concentration of ammonia was 0.028 mol/L·h; the concentration of ammonia in the reaction system at the 12th hour was 0.97 mol/L, and the change rate of the concentration of ammonia was 0.012 mol/L·h; the concentration of ammonia in the reaction system at the 24th hour was 1.07 mol/L, and the change rate of the concentration of ammonia was 0.0044 mol/L·h; at the 36th hour, the concentration of ammonia in the reaction system was 1.11 mol/L, and the change rate of the concentration of ammonia was 0.0023 mol/L·h; at the end of the reaction, the concentration of ammonia in the reaction system was approximately 1.13 mol/L, and the change rate of the concentration of ammonia was 0.0014 mol/L·h. After the precipitation reaction was terminated, it is naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn in the obtained positive electrode material precursor was 0.798:0.101:0.101. The positive electrode material precursor prepared above was characterized by SEM, as shown in Figure 2. As can be seen from Figure 2, the preparation method provided by the present application can be used to obtain a positive electrode material precursor with good sphericity, and the positive electrode material precursor has secondary particles in the form of microspheres formed by agglomeration of flaky primary particles.

In order to further analyze the agglomeration form of the flaky primary particles, the positive electrode material precursor was cut by ion beam and then characterized by SEM. The SEM image of the cross section of the positive electrode material precursor is shown in Figure 3. From Figure 3, it can be seen that the positive electrode material precursor obtained by the preparation method provided in the present application contains a three-layer structure from the inside to the outside, namely an inner core layer, a middle layer and an outermost layer, wherein the inner core layer is formed by the agglomeration of flaky primary particles, and the inner core layer is relatively loosely agglomerated, the thickness of the inner core layer was about 1.2 $\mu$m, the porosity of the inner core layer was about 7.24%. The outermost layer is also formed by the agglomeration of flaky primary particles, and the outer layer is more loosely aggregated than the inner core layer. The thickness of the outermost layer was about 0.25 $\mu$m, and the porosity of the outermost layer was about 9.65%. The middle layer between the inner core layer and the outermost layer is very densely aggregated, and the thickness of the middle layer is approximately 3.7 $\mu$m, and the porosity of the middle layer is approximately 3.31%.

The medium particle size of the positive electrode material precursor prepared in Example 1 was measured, and the results showed that the medium particle size D50 of the secondary microspheres of the positive electrode material precursor was 10.3 $\mu$m.

10g of the positive electrode material precursor prepared above was added to 400mL of hydrochloric acid solution with a concentration of 0.4 mol/L, was stirred for 15 minutes, filtered, then washed with deionized water 3 times, and then dried and dehydrated in a vacuum drying oven at 120°C for 6 hours, to get the kernel layer product. The XRD spectrum of the inner core layer was measured. The results are shown in Figure 4. From Figure 4, we can see the (110) and (102) crystal planes diffraction peaks of the inner core layer, wherein the ratio of the intensity of the (110) and (102) crystal planes diffraction peaks is 2.93.

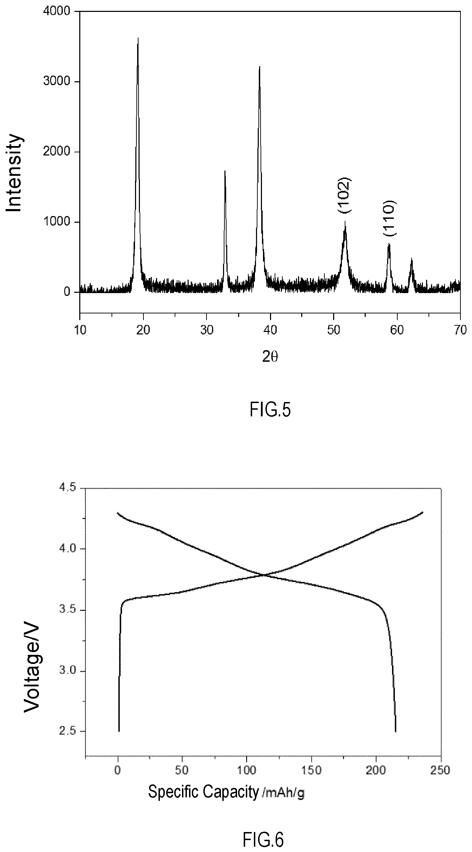

The positive electrode material precursor prepared in Example 1 was subjected to X-ray diffraction analysis, and the results are shown in Figure 5. From Figure 5 we can see the (110) and (102) crystal planes diffraction peaks of the precursor, wherein the ratio of the intensity of the (110) and (102) crystal planes diffraction peaks is 0.86.

(3) Preparation and evaluation of positive electrode materials

The positive electrode material precursor prepared above was taken and thoroughly mixed with the lithium source LiOH·H$_2$O by ball milling for 30 minutes, and the molar ratio of Li: (Ni+Co+Mn) was controlled to 1.05:1, and pre-fired at 500 °C for 4 hours in an oxygen atmosphere. It was then calcined at 900 °C for 12 hours to perform solid-state reaction to obtain the positive electrode material.

The positive electrode material prepared above, conductive agent and binder were mixed evenly according to the mass ratio of 8:1:1 and then coated on the aluminum foil, the solvent was dried, and it was sliced and used as a positive electrode. Wherein acetylene black was used as the conductive agent, a polyvinylidene fluoride solution with a mass fraction of 10% was used as the binder; metallic lithium was used as the negative electrode, an American Cellllgard2400 polypropylene separator was used as the separator, a liquid electrolyte was used as the electrolyte, and the solvents was mixed solvent of ethylene carbonate (EC) and dimethyl carbonate (DMC), the volume ratio of the two was 1:1, the solute is lithium hexafluorophosphate LiPF$_6$, and the molar concentration was 1 mol/L. 2032-type button cells were assembled in an inert atmosphere glove box with moisture and oxygen content below 0.1ppm.

In the charge-discharge voltage range of 2.5-4.3V, the electrochemical properties of the positive electrode material are measured. The results show that the first discharge specific capacity at 0.1C rate is 215.3 mAh/g, the Coulombic efficiency in the first week is 91.2%, the discharge specific capacity at 1C rate is 190.3mAh/g, and the capacity retention rate after 100 cycles at 1C rate can reach 107.6%, has high discharge specific capacity and excellent cycle stability. The specific electrochemical test results are shown in Figures 6 and 7.

**Example 2**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 2 mol/L was prepared, wherein the molar ratio of nickel, cobalt and aluminum in the metal source solution was 8: 1.5:0.5, and nickel sulfate, cobalt sulfate and manganese sulfate were used in the preparation process; a NaOH solution with a concentration of 6 mol/L was prepared; a complexing agent ammonia solution was prepared, in which the concentration of ammonia was 6 mol/L.
The prepared metal source solution, NaOH solution and complexing agent solution were added to the reaction kettle at the same time under stirring to conduct a precipitation reaction, wherein an ammonia solution accounting for 30% of the kettle volume was previously added to the reaction kettle and the concentration of ammonia was 0.5 mol/L. The initial volume flow rate ratio of the metal source solution to the complexing agent solution was controlled to 5, then the flow rate of the metal source solution was kept unchanged, the feed flow rate of the complexing agent was controlled, so that the concentration of the complexing agent in the system continues to increase, and the change rate of the concentration of the complexing agent continues to decrease, and the change of the concentration of the complexing agent in the system with the reaction time is basically the same as in Example 1. The reaction temperature was 50 °C, the total reaction time was 48h, the stirring speed during the reaction was 800rpm, and the flow rate of the NaOH solution was controlled so that the pH value of the reaction system is maintained near 11.4 throughout the reaction. The concentration of ammonia in the system at the end of the reaction was about 1.13 mol/L. After the precipitation reaction was terminated, it is naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Al in the obtained positive electrode material precursor was 0.803:0.151:0.046. The prepared positive electrode material precursor was subjected to SEM testing, and the SEM images were similar to Figures 2 and 3. The thickness of the inner core layer of the obtained positive electrode material precursor was about 1.16 $\mu$m, the porosity of the inner core layer was about 7.16%, the thickness of the outermost layer was about 0.27 $\mu$m, and the porosity of the outermost layer was about 8.98%. The thickness of the middle layer between the inner core layer and the outermost layer was about 3.82 $\mu$m, and the porosity of the middle layer was about 3.16%.
The medium particle size of the positive electrode material precursor prepared in Example 2 was measured, and the results showed that the medium particle size D50 of the secondary microspheres of positive electrode material precursor was 10.7 $\mu$m.
The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.79, and the ratio of the intensity of the (110) and (102) crystal planes diffraction peaks in the XRD spectrum of the precursor was 0.89.

(3) Preparation and evaluation of positive electrode materials

The positive electrode material and lithium ion battery were prepared according to the method described in Example 1.
The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 3**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 2 mol/L was formulated, wherein the molar ratio of nickel, cobalt and manganese in the metal source solution is 9:0.5:0.5. Nickel sulfate, cobalt sulfate and manganese sulfate were used in the preparation method. A NaOH solution with a concentration of 6 mol/L was prepared; a complexing agent ammonia solution was prepared, in which the concentration of ammonia was 6 mol/L.
The operation was carried out according to the method described in Example 1 to obtain a positive electrode material precursor.

(2) Evaluation of positive electrode material precursors

The molar ratio of Ni:Co:Mn in the obtained positive electrode material precursor was 0.901:0.050:0.049. The prepared positive electrode material precursor was subjected to SEM testing, and the SEM images were similar to Figures 2 and 3. The thickness of the inner core layer of the obtained positive electrode material precursor was about 1.54 $\mu$m, the porosity of the inner core layer was about 6.98%, the thickness of the outermost layer was about 0.59 $\mu$m, and the porosity of the outermost layer was about 8.63%. The thickness of the middle layer between the inner core layer and the outermost layer was about 3.92 $\mu$m, and the porosity of the middle layer was about 3.04%.
The medium particle size of the positive electrode material precursor prepared in Example 3 was measured, and the results showed that the medium particle size D50 of the secondary microspheres of the positive electrode material precursor was 12.5 $\mu$m.
The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.82, and the ratio of the intensity of the (110) and (102) crystal planes diffraction peaks in the XRD spectrum of the precursor was 0.97.

(3) Preparation and evaluation of positive electrode materials

The positive electrode material and lithium ion battery were prepared according to the method described in Example 1.
The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 4**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 3 mol/L was prepared. The molar ratio of nickel, cobalt and manganese in the metal source solution was 6:2:2. Nickel sulfate, cobalt sulfate and manganese sulfate were used in the preparation method; a NaOH solution with a concentration of 5 mol/L was prepared; a complexing agent ammonia solution was prepared, in which the concentration of ammonia was 5 mol/L.
The operation was carried out according to the method described in Example 1 to obtain a positive electrode material precursor.

(2) Evaluation of positive electrode material precursors

The molar ratio of Ni:Co:Mn in the obtained positive electrode material precursor was 0.603:0.198:0.199. The prepared positive electrode material precursor was subjected to SEM testing, and the SEM images were similar to Figures 2 and 3. The thickness of the inner core layer of the obtained positive electrode material precursor was about 1.17 $\mu$m, the porosity of the inner core layer was about 6.35%, the thickness of the outermost layer was about 0.31 $\mu$m, and the porosity of the outermost layer was about 9.32%. The thickness of the middle layer between the inner core layer and the outermost layer was about 3.27 $\mu$m, and the porosity of the middle layer was about 3.28%.
The medium particle size of the positive electrode material precursor prepared in Example 4 was measured, and the results showed that the medium particle size D50 of the secondary microspheres of the positive electrode material precursor was 9.7 μm.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.53, and the ratio of the intensity of the (110) and (102) crystal planes diffraction peaks in the XRD spectrum of the precursor is 0.87.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 5**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 5 mol/L was prepared, wherein the molar ratio of nickel, cobalt and manganese elements in the metal source solution was 8:1:1. Nickel sulfate, cobalt sulfate and manganese sulfate were used in the preparation method; a NaOH solution with a concentration of 15 mol/L was prepared; a complexing agent ammonia solution was prepared, in which the concentration of ammonia was 15 mol/L.

The operation was carried out according to the method described in Example 1 to obtain a positive electrode material precursor.

(2) Evaluation of positive electrode material precursors

The molar ratio of Ni:Co:Mn in the obtained positive electrode material precursor was 0.797:0.101:0.102. The prepared positive electrode material precursor was subjected to SEM testing, and the SEM images were similar to Figures 2 and 3. The thickness of the inner core layer of the obtained positive electrode material precursor was about 0.52 μm, the porosity of the inner core layer was about 5.68%, the thickness of the outermost layer was about 0.22 μm, and the porosity of the outermost layer was about 7.16%. The thickness of the middle layer between the outermost layer and the outermost layer was about 4.66 μm, and the porosity of the middle layer was about 2.36%.

The medium particle size of the positive electrode material precursor prepared in Example 5 was measured, and the results showed that the medium particle size D50 of the secondary microspheres of the positive electrode material precursor was 10.8 μm.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.08, and the ratio of the intensity of the (110) and (102) crystal planes diffraction peaks in the XRD spectrum of the precursor was 0.96.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 6**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 0.5 mol/L was prepared, wherein the molar ratio of nickel, cobalt and manganese elements in the metal source solution is 8:1:1. During the preparation method, nickel sulfate, cobalt sulfate and manganese sulfate were used; a NaOH solution with a concentration of 2 mol/L was prepared; a complexing agent ammonia solution was prepared, in which the concentration of ammonia is 3 mol/L.

The operation was carried out according to the method described in Example 1 to obtain a positive electrode material precursor.

(2) Evaluation of positive electrode material precursors

The molar ratio of Ni:Co:Mn in the obtained positive electrode material precursor was 0.803:0.101:0.096. The prepared positive electrode material precursor was subjected to SEM testing, and the SEM images were similar to Figures 2 and 3. The thickness of the inner core layer of the obtained positive electrode material precursor was about 1.85 $\mu$m, the porosity of the inner core layer was about 12.4%, the thickness of the outermost layer was about 0.59 $\mu$m, and the porosity of the outermost layer was about 23.2%. The thickness of the middle layer between the inner core layer and the outermost layer was about 2.46 $\mu$m, and the porosity of the middle layer was about 4.80%.

The medium particle size of the positive electrode material precursor prepared in Example 6 was measured, and the results showed that the medium particle size D50 of the secondary microspheres of the positive electrode material precursor was 9.8 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 1.94, and the ratio of the intensity of the (110) and (102) crystal planes diffraction peaks in the XRD spectrum of the precursor was 1.04.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 7**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 2 mol/L was prepared. The molar ratio of nickel, cobalt and manganese in the metal source solution was 8:1:1. Nickel sulfate, cobalt sulfate and manganese sulfate were used in the preparation method; a NaOH solution with a concentration of 6 mol/L was prepared; a complexing agent ammonia solution was prepared, in which the concentration of ammonia was 6 mol/L.

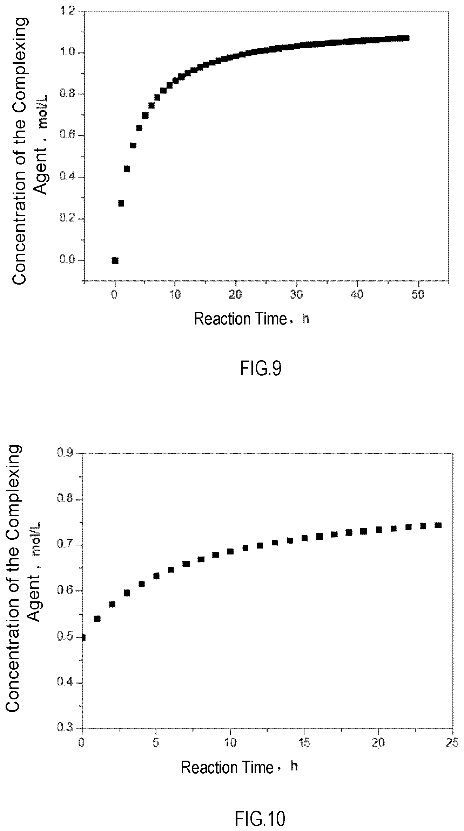

The prepared metal source solution, NaOH solution and complexing agent solution were simultaneously added to the reaction kettle under stirring to cause a precipitation reaction. Water accounting for 40% of the kettle volume was pre-added to the reaction kettle. The initial volume flow rate ratio of the metal source solution and the complexing agent solution was controlled to 4, then the flow rate of the metal source solution was kept unchanged, the feed flow rate of the complexing agent was controlled, so that the concentration of the complexing agent in the system continued to increase, and the change rate of the concentration of the complexing agent continued to decrease. The change of the concentration of the complexing agent in the system with the reaction time is shown in Figure 9. The change rate of the concentration of the complexing agent satisfies the functional relationship $f(t) = 3.61/(3.17+t)^2$. During the reaction, the stirring speed was 800 rpm, the reaction temperature was 55 °C, and the total reaction time was 48 h. The flow rate of the NaOH solution was controlled so that the pH value of the reaction system was maintained near 11.3 throughout the reaction. Wherein, the concentration of ammonia in the reaction system at the beginning of the reaction was 0 mol/L·h, and the change rate of the concentration of ammonia was 0.359 mol/L·h; at the 12th hour, the concentration of ammonia in the reaction system was 0.91 mol/L, and the change rate of the concentration of ammonia was 0.016 mol/L·h; at the 24th hour, the concentration of ammonia in the reaction system was 1.01 mol/L, and the change rate of the concentration of ammonia was 0.0049 mol/L·h; at the 36th hour, the concentration of ammonia in the reaction system was 1.05mol/L, and the change rate of the concentration of ammonia was 0.0024 mol/L·h; when the reaction was terminated, the concentration of ammonia in the reaction system was about 1.07 mol/L, and the change rate of the concentration of ammonia was 0.0014 mol/L·h. After the precipitation reaction was terminated, it was naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn in the obtained positive electrode material precursor was 0.796:0.103:0.101. The prepared positive electrode material precursor was subjected to SEM testing, and the SEM images were similar to Figures 2 and 3. The thickness of the inner core layer of the obtained positive electrode material precursor was about 1.38 $\mu$m, the porosity of the inner core layer was about 6.87%, the thickness of the outermost layer was about 0.28 $\mu$m, and the porosity of the outermost layer was about 8.74%. The thickness of the middle layer between the inner core layer and the outermost layer was about 3.54 $\mu$m, and the porosity of the middle layer was about 3.12%.
The medium particle size of the positive electrode material precursor prepared in Example 7 was measured, and the results showed that the medium particle size D50 of the secondary microspheres of the positive electrode material precursor was 10.2 $\mu$m.
The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.51, and the ratio of the intensity of the (110) and (102) crystal planes diffraction peaks in the XRD spectrum of the precursor was 1.02.

(3) Preparation and evaluation of positive electrode materials

The positive electrode material and lithium ion battery were prepared according to the method described in Example 1.
The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 8**

This example is used to illustrate the preparation and evaluation methods of the positive electrode material precursor and positive electrode material described in the present application.

(1) Preparation of positive electrode material precursor

Calculated on basis of metal elements, a metal source solution with a concentration of 2 mol/L was prepared, wherein the molar ratio of nickel, cobalt and manganese in the metal source solution is 8:1:1. Nickel sulfate, cobalt sulfate and manganese sulfate were used in the preparation method; a NaOH solution with a concentration of 6 mol/L was prepared; a complexing agent ammonia solution was prepared, in which the concentration of ammonia was 6 mol/L.
The prepared metal source solution, NaOH solution and complexing agent solution were added to the reaction kettle at the same time under stirring to cause a precipitation reaction. An ammonia solution accounting for 30% of the kettle volume was pre-added to the reaction kettle, wherein the concentration of ammonia was 0.5 mol/L. The initial volume flow rate ratio of the metal source solution and the complexing agent solution was controlled to 3, then the flow rate of the metal source solution was kept unchanged, the feed flow rate of the complexing agent was controlled, so that the concentration of the complexing agent in the system continues to increase, and the change rate of the concentration of the complexing agent continued to decrease. The change of the concentration of the complexing agent in the system with the reaction time is shown in Figure 10. The change rate of the concentration of the complexing agent satisfies the functional relationship $f(t) = 2.1/(6.78+t)^2$. During the reaction, the stirring speed was 800 rpm, the reaction temperature was 55 °C, and the total reaction time was 24 h. The flow rate of the NaOH solution was controlled so that the pH value of the reaction system was maintained near 11.6 throughout the reaction. Wherein, the concentration of ammonia in the reaction system at the beginning of the reaction was 0.5 mol/L, and the change rate of ammonia concentration was 0.046 mol/L·h; at the 6th hour, the concentration of ammonia in the reaction system was 0.65 mol/L, and the change rate of the concentration of ammonia was 0.013 mol/L·h; at the 12th hour, the concentration of ammonia in the reaction system is 0.7 mol/L, and the change rate of the concentration of ammonia was 0.006 mol/L·h; at the 18th hour, the concentration of ammonia in the reaction system was 0.73 mol/L, and the change rate of the concentration of ammonia was 0.0034 mol/L·h; when the reaction terminates, the concentration of ammonia in the system is approximately 0.74 mol/L, and the change rate of the concentration of ammonia was 0.0022 mol/L·h. After the precipitation reaction was terminated, it was naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn in the obtained positive electrode material precursor was 0.795:0.102:0.103. The prepared positive electrode material precursor was subjected to SEM testing, and the SEM images were similar to Figures 2 and 3. The thickness of the inner core layer of the obtained positive electrode material precursor was about 0.83 μm, the porosity of the inner core layer was about 7.04%, the thickness of the outermost layer was about 0.18 μm, and the porosity of the outermost layer was about 8.83%. The thickness of the middle layer between the first layer and the outermost layer was about 2.39 μm, and the porosity of the middle layer was about 3.22%.
The medium particle size of the positive electrode material precursor prepared in Example 8 was measured, and the results showed that the medium particle size D50 of the secondary microspheres of the positive electrode material precursor was 6.5 μm.
The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.25, and the ratio of the intensity of the (110) and (102) crystal planes diffraction peaks in the XRD spectrum of the precursor was 0.91.

(3) Preparation and evaluation of positive electrode materials

The positive electrode material and lithium ion battery were prepared according to the method described in Example 1.
The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 9**

This example is used to illustrate the preparation and evaluation methods of the positive electrode material precursors and positive electrode materials described in the present application.

(1) Preparation of positive electrode material precursor

The operation was carried out according to the method described in Example 1, except that the pH value of the system was controlled to 14, to obtain the positive electrode material precursor.

(2) Evaluation of positive electrode material precursors

The molar ratio of Ni:Co:Mn in the obtained positive electrode material precursor was 0.802:0.101:0.097. The prepared positive electrode material precursor was subjected to SEM testing, and the SEM images were similar to Figures 2 and 3. The thickness of the inner core layer of the obtained positive electrode material precursor was about 1.76 μm, the porosity of the inner core layer was about 10.3%, the thickness of the outermost layer was about 0.98 μm, and the porosity of the outermost layer was about 18.4%. The thickness of the middle layer between the inner core layer and the outermost layer was about 2.56 μm, and the porosity of the middle layer was about 4.72%.
The medium particle size of the positive electrode material precursor prepared in Example 9 was measured, and the results showed that the medium particle size D50 of the secondary microspheres of the positive electrode material precursor was 10.3 μm.
The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 1.62, and the ratio of the intensity of the (110) and (102) crystal planes diffraction peaks in the XRD spectrum of the precursor was 1.23.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 10**

This example is used to illustrate the preparation and evaluation methods of the positive electrode material precursors and positive electrode materials described in the present application.

(1) Preparation of positive electrode material precursor

The operation was carried out according to the method described in Example 1, except that the pH value of the system was controlled to 8, to obtain the positive electrode material precursor.

(2) Evaluation of positive electrode material precursors

The molar ratio of Ni:Co:Mn in the obtained positive electrode material precursor was 0.791:0.102:0.107. The prepared positive electrode material precursor was subjected to SEM testing, and the SEM images were similar to Figures 2 and 3. The thickness of the inner core layer of the obtained positive electrode material precursor was about 0.36 $\mu$m, the porosity of the inner core layer was about 5.90%, the thickness of the outermost layer was about 0.14 $\mu$m, and the porosity of the outermost layer was about 6.73%, the thickness of the middle layer between the inner core layer and the outermost layer was about 5.3 $\mu$m, and the porosity of the middle layer was about 1.26%.

The medium particle size of the positive electrode material precursor prepared in Example 10 was measured, and the results showed that the medium particle size D50 of the secondary microspheres of the positive electrode material precursor was 11.9 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 1.41, and the ratio of the intensity of the (110) and (102) crystal planes diffraction peaks in the XRD spectrum of the precursor was 1.31.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 11**

This example is used to illustrate the preparation and evaluation methods of the positive electrode material precursors and positive electrode materials described in the present application.

(1) Preparation of positive electrode material precursor

The operation was carried out according to the method described in Example 1, except that the reaction temperature of the system was controlled to 70 °C, to obtain the positive electrode material precursor.

(2) Evaluation of positive electrode material precursors

The molar ratio of Ni:Co:Mn in the obtained positive electrode material precursor was 0.796:0.096:0.108. The prepared positive electrode material precursor was subjected to SEM testing, and the SEM images were similar to Figures 2 and 3. The thickness of the inner core layer of the obtained positive electrode material precursor was about 0.61 $\mu$m, the porosity of the inner core layer was about 6.22%, the thickness of the outermost layer was about 0.42 $\mu$m,

and the porosity of the outermost layer was about 7.12%. The thickness of the middle layer between the first layer and the outermost layer was about 4.07 µm, and the porosity of the middle layer was about 1.78%.

The medium particle size of the positive electrode material precursor prepared in Example 11 was measured, and the results showed that the medium particle size D50 of the secondary microspheres of the positive electrode material precursor was 9.8 µm.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 1.83. The ratio of the intensity of the (110) and (102) crystal planes diffraction peaks in the XRD spectrum of the precursor is 1.07.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 12**

This example is used to illustrate the preparation and evaluation methods of the positive electrode material precursors and positive electrode materials described in the present application.

(1) Preparation of positive electrode material precursor

The operation was carried out according to the method described in Example 1, except that the reaction temperature of the system was controlled to 20 °C, to obtain the positive electrode material precursor.

(2) Evaluation of positive electrode material precursors

The molar ratio of Ni:Co:Mn in the obtained positive electrode material precursor was 0.801:0.102:0.097. The prepared positive electrode material precursor was subjected to SEM testing, and the SEM images were similar to Figures 2 and 3. The thickness of the inner core layer of the obtained positive electrode material precursor was about 1.45 µm, the porosity of the inner core layer was about 8.66%, the thickness of the outermost layer was about 0.62 µm, and the porosity of the outermost layer was about 13.79%. The thickness of the middle layer between the inner core layer and the outermost layer was about 3.33 µm, and the porosity of the middle layer was about 3.94%.

The medium particle size of the positive electrode material precursor prepared in Example 12 was measured, and the results showed that the medium particle size D50 of the secondary microspheres of the positive electrode material precursor was 10.1 µm .

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 1.72, and the ratio of the intensity of the (110) and (102) crystal planes diffraction peaks in the XRD spectrum of the precursor was 1.11.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 13**

This example is used to illustrate the preparation and evaluation methods of the positive electrode material precursors and positive electrode materials described in the present application.

(1) Preparation of positive electrode material precursor

The operation was carried out according to the method described in Example 1, except that the stirring speed of the system was controlled to 50 rpm, to obtain the positive electrode material precursor.

(2) Evaluation of positive electrode material precursors

The molar ratio of Ni:Co:Mn in the obtained positive electrode material precursor was 0.797:0.101:0.102. The prepared positive electrode material precursor was subjected to SEM testing, and the SEM images were similar to Figures 2 and 3. The thickness of the inner core layer of the obtained positive electrode material precursor was about 1.73 $\mu$m, the porosity of the inner core layer was about 9.31%, the thickness of the outermost layer was about 0.52 $\mu$m, and the porosity of the outermost layer was about 15.52%. The thickness of the middle layer between the inner core layer and the outermost layer was about 3 $\mu$m, and the porosity of the middle layer was about 4.64%.

The medium particle size of the positive electrode material precursor prepared in Example 13 was measured, and the results showed that the medium particle size D50 of the secondary microspheres of the positive electrode material precursor was 10.5 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 1.67, and the ratio of the intensity of the (110) and (102) crystal planes diffraction peaks in the XRD spectrum of the precursor was 1.06.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 14**

This example is used to illustrate the preparation and evaluation methods of the positive electrode material precursors and positive electrode materials described in the present application.

(1) Preparation of positive electrode material precursor

The operation was carried out according to the method described in Example 1, except that the stirring speed of the system was controlled to 1200 rpm to obtain the positive electrode material precursor.

(2) Evaluation of positive electrode material precursors

The molar ratio of Ni:Co:Mn in the obtained positive electrode material precursor was 0.801:0.102:0.097. The prepared positive electrode material precursor was subjected to SEM testing, and the SEM images were similar to Figures 2 and 3. The thickness of the inner core layer of the obtained positive electrode material precursor was about 1.15 $\mu$m, the porosity of the inner core layer was about 7.21%, the thickness of the outermost layer was about 0.27 $\mu$m, and the porosity of the outermost layer was about 9.46%. The thickness of the middle layer between the inner core layer and the outermost layer was about 3.68 $\mu$m, and the porosity of the middle layer was about 3.22%.

The medium particle size of the positive electrode material precursor prepared in Example 14 was measured, and the results showed that the medium particle size D50 of the secondary microspheres of the positive electrode material precursor was 10.2 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.76, and the ratio of the intensity of the (110) and (102) crystal planes diffraction peaks in the XRD spectrum of the precursor was 0.88.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 15**

This example is used to illustrate the preparation and evaluation methods of the positive electrode material precursor and positive electrode material described in the present application.

(1) Preparation of positive electrode material precursor

The operation was carried out according to the method described in Example 1, except that $TiSO_4$ was added to the metal source solution, wherein Ti/(Ni+Co+Mn)=1 mol%, to obtain the positive electrode material precursor.

(2) Evaluation of positive electrode material precursors

The molar ratio of Ni:Co:Mn:Ti in the obtained positive electrode material precursor was 0.798:0.101:0.101:0.0099. The prepared positive electrode material precursor was subjected to SEM testing, and the SEM images were similar to Figures 2 and 3. The thickness of the inner core layer of the obtained positive electrode material precursor was about 1.32 $\mu$m, the porosity of the inner core layer was about 7.09%, the thickness of the outermost layer was about 0.24 $\mu$m, and the porosity of the outermost layer was about 9.03%. The thickness of the middle layer between the inner core layer and the outermost layer was about 3.64 $\mu$m, and the porosity of the middle layer was about 3.45%.

The medium particle size of the positive electrode material precursor prepared in Examples 15 was measured, and the results showed that the medium particle size D50 of the secondary microspheres of the positive electrode material precursor was 10.5 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.85, and the ratio of the intensity of the (110) and (102) crystal planes diffraction peaks in the XRD spectrum of the precursor was 0.89.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 16**

This example is used to illustrate the preparation and evaluation methods of the positive electrode material precursor and positive electrode material described in the present application.

(1) Preparation of positive electrode material precursor

The operation was carried out according to the method described in Example 1, except that $Mg(NO_3)_2$ was added to the metal source solution, wherein Mg/(Ni+Co+Mn)=1 mol%, to obtain the positive electrode material precursor.

(2) Evaluation of positive electrode material precursors

The molar ratio of Ni:Co:Mn:Mg in the obtained positive electrode material precursor was 0.801:0.102:0.097:0.0098. The prepared positive electrode material precursor was subjected to SEM testing, and the SEM images were similar to Figures 2 and 3. The thickness of the inner core layer of the obtained positive electrode material precursor was about 1.47 $\mu$m, the porosity of the inner core layer was about 7.18%, the thickness of the outermost layer was about 0.28 $\mu$m, and the porosity of the outermost layer was about 9.32%. The thickness of the middle layer between the inner core layer and the outermost layer was about 3.5 $\mu$m, and the porosity of the middle layer was about 3.33%.

The medium particle size of the positive electrode material precursor prepared in Example 16 was measured, and the results showed that the medium particle size D50 of the secondary microspheres of the positive electrode material precursor was 10.9 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.82, and the ratio of the intensity of the (110) and (102) crystal planes diffraction peaks in the XRD spectrum of the precursor was 0.91.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 17**

This example is used to illustrate the preparation and evaluation methods of the positive electrode material precursor and positive electrode material described in the present application.

(1) Preparation of positive electrode material precursor

The operation was carried out according to the method described in Example 1, except that $B_2O_3$ was added to the metal source solution, wherein B/(Ni+Co+Mn)=1 mol%, to obtain the positive electrode material precursor.

(2) Evaluation of positive electrode material precursors

The molar ratio of Ni:Co:Mn:B in the obtained positive electrode material precursor was 0.802:0.101:0.097:0.0095. The prepared positive electrode material precursor was subjected to SEM testing, and the SEM images were similar to Figures 2 and 3. The thickness of the inner core layer of the obtained positive electrode material precursor was about 1.33 $\mu$m, the porosity of the inner core layer was about 7.06%, the thickness of the outermost layer was about 0.33 $\mu$m, and the porosity of the outermost layer was about 9.12%. The thickness of the middle layer between the inner core layer and the outermost layer was about 3.74 $\mu$m, and the porosity of the middle layer was about 3.38%.

The medium particle size of the positive electrode material precursor prepared in Example 17 was measured, and the results showed that the medium particle size D50 of the secondary microspheres of the positive electrode material precursor was 10.4 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.83, and the ratio of the intensity of the (110) and (102) crystal planes diffraction peaks in the XRD spectrum of the precursor was 0.88.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 18**

This example is used to illustrate the preparation and evaluation methods of the positive electrode material precursor and positive electrode material described in the present application.

(1) Preparation of positive electrode material precursor

The operation was carried out according to the method described in Example 1, except that $Cr(NO_3)_3$ was added to the metal source solution, wherein Cr/(Ni+Co+Mn)=1 mol%, to obtain the positive electrode material precursor.

(2) Evaluation of positive electrode material precursors

The molar ratio of Ni:Co:Mn:Cr in the obtained positive electrode material precursor was 0.803:0.101:0.096:0.0097. The prepared positive electrode material precursor was subjected to SEM testing, and the SEM images were similar to Figures 2 and 3. The thickness of the inner core layer of the obtained positive electrode material precursor was about 1.44 $\mu$m, the porosity of the inner core layer was about 6.69%, the thickness of the outermost layer was about 0.44 $\mu$m, and the porosity of the outermost layer was about 8.25%. The thickness of the middle layer between the inner core layer and the outermost layer was about 4.43 $\mu$m, and the porosity of the middle layer was about 2.96%.

The medium particle size of the positive electrode material precursor prepared in Example 18 was measured, and the results showed that the medium particle size D50 of the secondary microspheres of the positive electrode material precursor was 12.5 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 3.37, and the ratio of the intensity of the (110) and (102) crystal planes diffraction peaks in the XRD spectrum of the precursor was 1.14.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 19**

This example is used to illustrate the preparation and evaluation methods of the positive electrode material precursor and positive electrode material described in the present application.

(1) Preparation of positive electrode material precursor

The operation was carried out according to the method described in Example 1, except that $Hf(NO_3)_4$ was added to the metal source solution, where Hf/(Ni+Co+Mn)=1 mol%, to obtain the positive electrode material precursor.

(2) Evaluation of positive electrode material precursors

The molar ratio of Ni:Co:Mn:Hf in the obtained positive electrode material precursor was 0.801:0.104:0.095:0.0099. The prepared positive electrode material precursor was subjected to SEM testing, and the SEM images were similar to Figures 2 and 3. The thickness of the inner core layer of the obtained positive electrode material precursor was about 1.51 $\mu$m, the porosity of the inner core layer was about 6.25%, the thickness of the outermost layer was about 0.39 $\mu$m, and the porosity of the outermost layer was about 8.36%. The thickness of the middle layer between the inner core layer and the outermost layer was about 5 $\mu$m, and the porosity of the middle layer was about 3.02%.

The medium particle size of the positive electrode material precursor prepared in Example 19 was measured, and the results showed that the medium particle size D50 of the secondary microspheres of the positive electrode material precursor was 14 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.98, and the ratio of the intensity of the (110) and (102) crystal planes diffraction peaks in the XRD spectrum of the precursor was 1.06.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 20**

This example is used to illustrate the preparation and evaluation methods of the positive electrode material precursor and positive electrode material described in the present application.

(1) Preparation of positive electrode material precursor

The operation was conducted according to the method described in Example 2, except that $Nb(NO_3)_5$ was added to the metal source solution, wherein Nb/(Ni+Co+Al)=1mol%, to obtain a positive electrode material precursor.

(2) Evaluation of positive electrode material precursors

The molar ratio of Ni:Co:Al:Nb in the obtained positive electrode material precursor was 0.802:0.151:0.047:0.0098. The prepared positive electrode material precursor was subjected to SEM testing, and the SEM images were similar to Figures 2 and 3. The thickness of the inner core layer of the obtained positive electrode material precursor was about 1.18 $\mu$m, the porosity of the inner core layer was about 6.93%, the thickness of the outermost layer was about 0.31 $\mu$m, and the porosity of the outermost layer was about 8.96%. The thickness of the middle layer between the inner core layer and the outermost layer was about 2.8 $\mu$m, and the porosity of the middle layer was about 3.32%.

The medium particle size of the positive electrode material precursor prepared in Example 20 was measured, and the results showed that the medium particle size D50 of the secondary microspheres of the positive electrode material precursor was 8.3 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.76. The ratio of the intensity of the (110) and (102) crystal planes diffraction peaks in the XRD spectrum of the precursor is 0.92.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Example 21**

This example is used to illustrate the preparation and evaluation methods of the positive electrode material precursor and positive electrode material described in the present application.

(1) Preparation of positive electrode material precursor

The operation was conducted according to the method described in Example 2, except that $Ce(NO_3)_4$ was added to the metal source solution, wherein Ce/(Ni+Co+Al )=1 mol%, to obtain the positive electrode material precursor.

(2) Evaluation of positive electrode material precursors

The molar ratio of Ni:Co:Al:Ce in the obtained positive electrode material precursor was 0.801:0.149:0.05:0.0097. The prepared positive electrode material precursor was subjected to SEM testing, and the SEM images were similar to Figures 2 and 3. The thickness of the inner core layer of the obtained positive electrode material precursor was about 1.23 $\mu$m, the porosity of the inner core layer was about 6.73%, the thickness of the outermost layer was about 0.37 $\mu$m, and the porosity of the outermost layer was about 8.87%. The thickness of the middle layer between the inner core layer and the outermost layer was about 3.1 $\mu$m, and the porosity of the middle layer was about 3.16%.

The medium particle size of the positive electrode material precursor prepared in Example 21 was measured, and the results showed that the medium particle size D50 of the secondary microspheres of the positive electrode material precursor was 9.5 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.77. The ratio of the intensity of the (110) and (102) crystal planes diffraction peaks in the XRD spectrum of the precursor is 0.93.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

## Example 22

This example is used to illustrate the preparation and evaluation methods of the positive electrode material precursor and positive electrode material described in the present application.

(1) Preparation of positive electrode material precursor

The operation was conducted according to the method described in Example 2, except that $Nd(NO_3)_3$ was added to the metal source solution, where Nd /(Ni+Co+Al)=1mol%, to obtain the positive electrode material precursor.

(2) Evaluation of positive electrode material precursors

The molar ratio of Ni:Co:Al:Nd in the obtained positive electrode material precursor was 0.798:0.151:0.051:0.0095. The prepared positive electrode material precursor was subjected to SEM testing, and the SEM images were similar to Figures 2 and 3. The thickness of the inner core layer of the obtained positive electrode material precursor was about 1.00 $\mu$m, the porosity of the inner core layer was about 6.58%, the thickness of the outermost layer was about 0.26 $\mu$m, and the porosity of the outermost layer was about 8.55%. The thickness of the middle layer between the inner core layer and the outermost layer was about 3.64 $\mu$m, and the porosity of the middle layer was about 3.08%.

The medium particle size of the positive electrode material precursor prepared in Example 22 was measured, and the results showed that the medium particle size D50 of the secondary microspheres of the positive electrode material precursor was 9.7 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.88. The ratio of the intensity of the (110) and (102) crystal planes diffraction peaks in the XRD spectrum of the precursor is 0.98.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

## Example 23

This example is used to illustrate the preparation and evaluation methods of the positive electrode material precursor and positive electrode material described in the present application.

(1) Preparation of positive electrode material precursor

The operation was conducted according to the method described in Example 2, except that $NH_4F$ was added to the metal source solution, wherein F/(Ni+Co+Al)=1mol%, to obtain the positive electrode material precursor.

(2) Evaluation of positive electrode material precursors

The molar ratio of Ni:Co:Al:F in the obtained positive electrode material precursor is 0.803:0.146:0.051:0.0087. The prepared positive electrode material precursor was subjected to SEM testing, and the SEM images were similar to Figures 2 and 3. The thickness of the inner core layer of the obtained positive electrode material precursor was about 1.14 $\mu$m, the porosity of the inner core layer was about 7.14%, the thickness of the outermost layer was about 0.42 $\mu$m, and the porosity of the outermost layer was about 9.02%. The thickness of the middle layer between the inner core layer and the outermost layer was about 3.54 $\mu$m, and the porosity of the middle layer was about 3.41%.

The medium particle size of the positive electrode material precursor prepared in Example 23 was measured, and the results showed that the medium particle size D50 of the secondary microspheres of the positive electrode material precursor was 10.2 $\mu$m.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 2.73, and the ratio of the intensity of the (110) and (102) crystal planes diffraction peaks in the XRD spectrum of the precursor is 0.88.

(3) Preparation and evaluation of positive electrode materials

The positive electrode material and lithium ion battery were prepared according to the method described in Example 1.

The electrochemical properties of the positive electrode material were measured in the charge-discharge voltage range of 2.5-4.3V. The specific results of the obtained discharge specific capacity, Coulombic efficiency in the first week and capacity retention rate after 100 cycles are shown in Table 2.

**Comparative Example 1**

(1) Preparation of positive electrode material precursor

The operation was carried out according to the method described in Example 1, and calculated on basis of metal elements, a metal source solution with a concentration of 2 mol/L was prepared, wherein the molar ratio of nickel, cobalt and manganese elements in the metal source solution was 8:1:1. During the preparation, nickel sulfate, cobalt sulfate and manganese sulfate were used; a NaOH solution with a concentration of 6 mol/L was prepared; a complexing agent ammonia solution was prepared, in which the concentration of ammonia was 6 mol/L.

The prepared metal source solution and NaOH solution were dropped into the reaction kettle at the same time under stirring to cause a precipitation reaction. An ammonia solution accounting for 30% of the kettle volume was pre-added to the reaction kettle, and the concentration of ammonia was 0.5 mol/L. The dropping rate of the metal source solution was the same as in Example 1, and the dropping rate of the NaOH solution was controlled so that the pH value of the reaction system was 11.2. The total amount of ammonia water (the total amount of ammonia used was the same as in Example 1) was added to the reaction system in three equal parts at 1h, 10h, and 30h after the reaction started. During the reaction, the stirring speed was controlled to 800 rpm, the reaction temperature was 55 °C, and the total reaction time was 48 h. After natural cooling, the precipitation reaction was terminated. The above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn in the obtained positive electrode material precursor was 0.802:0.101:0.097.

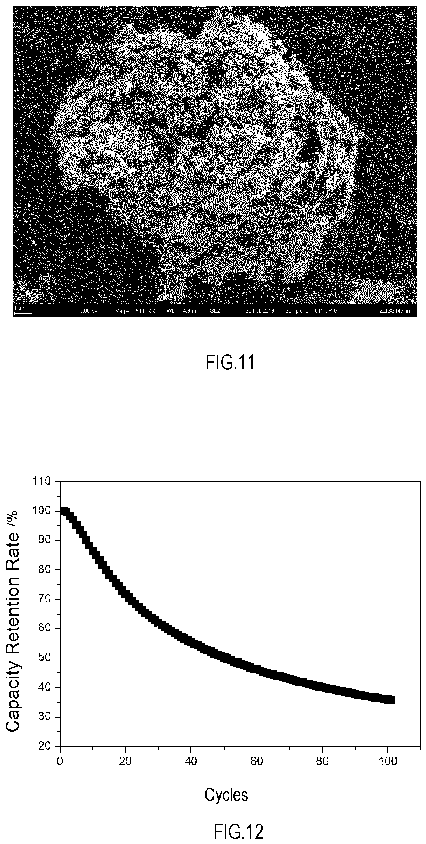

The SEM image of the prepared positive electrode material precursor is shown in Figure 11. The precursor is an irregular agglomerate formed by loose agglomeration of nanoparticles, and the sphericity of the particles is very poor.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 0.64, and the ratio of the intensity of the (110) and (102) crystal planes diffraction peaks in the XRD spectrum of the precursor was 0.66.

(3) Preparation and evaluation of positive electrode materials

The positive electrode material and lithium ion battery were prepared according to the method described in Example 1. In the charge-discharge voltage range of 2.5-4.3V, the electrochemical properties of the positive electrode material are measured. The results showd that the first discharge specific capacity at 0.1C rate was 172.3mAh/g, the Coulombic efficiency in the first week was 83.4%, the discharge specific capacity at 1C rate was 160.1mAh/g, and the capacity retention rate after 100 cycles at 1C rate was 35.9% (as shown in Figure 12).

**Comparative Example 2**

(1) Preparation of positive electrode material precursor

The operation was carried out according to the method described in Example 1, and calculated on basis of metal elements, a metal source solution with a concentration of 2 mol/L was prepared, wherein the molar ratio of nickel, cobalt and manganese elements in the metal source solution was 8:1:1. During the preparation, nickel sulfate, cobalt sulfate and manganese sulfate were used; a NaOH solution with a concentration of 6 mol/L was prepared; a complexing agent ammonia solution was prepared, in which the concentration of ammonia was 6 mol/L.
The prepared metal source solution, NaOH solution and complexing agent solution were added to the reaction kettle at the same time under stirring to cause a precipitation reaction. An ammonia solution accounting for 30% of the kettle volume was pre-added to the reaction kettle, wherein the concentration of ammonia was 0.5 mol/L. The initial volume flow rate ratio of the metal source solution and the complexing agent solution was controlled to 3, then the flow rate of the metal source solution was kept unchanged, and the feed flow rate of the complexing agent was controlled so that the concentration of the complexing agent in the system is stable at about 0.5 mol/ L until the reaction was terminated. The flow rate of the NaOH solution was controlled so that the pH value of the reaction system was maintained near 11.2 throughout the reaction. During the reaction, the stirring speed was 800 rpm, the reaction temperature was 55 °C, and the total reaction time was 48 h. After the precipitation reaction was terminated, it was naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn in the obtained positive electrode material precursor was 0.801:0.103:0.096.
The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 0.85, and the ratio of the intensity of the (110) and (102) crystal planes diffraction peaks in the XRD spectrum of the precursor was 0.89.

(3) Preparation and evaluation of positive electrode materials

The positive electrode material and lithium ion battery were prepared according to the method described in Example 1. In the charge-discharge voltage range of 2.5-4.3V, the electrochemical properties of the positive electrode material are measured. The results showed that the first discharge specific capacity at 0.1C rate is 198.4mAh/g, the Coulombic efficiency in the first week is 87.6%, the discharge specific capacity at 1C rate is 174.6 mAh/g, and the capacity retention rate after 100 cycles at 1C rate 86.9%.

**Comparative Example 3**

(1) Preparation of positive electrode material precursor

The operation was carried out according to the method described in Example 1; calculated on basis of metal elements, and a metal source solution with a concentration of 2 mol/L was prepared, wherein the molar ratio of nickel, cobalt and manganese elements in the metal source solution was 8:1:1. During the preparation, nickel sulfate, cobalt sulfate and manganese sulfate were used; a NaOH solution with a concentration of 6 mol/L was prepared; a complexing agent ammonia solution was prepared, in which the concentration of ammonia was 6 mol/L.
Add the prepared metal source solution, NaOH solution and complexing agent solution to the reaction kettle at the same time while stirring to cause a precipitation reaction. An ammonia solution accounting for 30% of the kettle volume was pre-added to the reaction kettle, wherein the concentration of ammonia was 0.5 mol/L. The initial volume flow rate ratio of the metal source solution and the complexing agent solution was controlled to 3, then the flow rate of the metal source solution was kept unchanged, and the feed flow rate of the complexing agent was controlled so that the concentration of the complexing agent in the system was increased linearly at rate of 0.01 mol/L/h until the reaction was terminated. The flow rate of the NaOH solution was controlled so that the pH value of the reaction system was maintained near 11.2 throughout the reaction. During the reaction, the stirring speed was 800 rpm, the reaction temperature was 55 °C, and the total reaction time was 48 h. After the precipitation reaction was terminated, it was naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn: in the obtained positive electrode material precursor was 0.797:0.101:0.102.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 0.91, and the ratio of the intensity of the (110) and (102) crystal planes diffraction peaks in the XRD spectrum of the precursor was 0.96.

(3) Preparation and evaluation of positive electrode materials

The positive electrode material and lithium ion battery were prepared according to the method described in Example 1. In the charge-discharge voltage range of 2.5-4.3V, the electrochemical properties of the positive electrode material were measured. The results showed that the first discharge specific capacity at 0.1C rate is 203.4 mAh/g, the Coulombic efficiency in the first week is 90.1 %, the discharge specific capacity at 1C rate is 180.1 mAh/g, and the capacity retention rate after 100 cycles at 1C rate is 91.1%.

**Comparative Example 4**

(1) Preparation of positive electrode material precursor

The operation was carried out according to the method described in Example 1; calculated on basis of metal elements, a metal source solution with a concentration of 2 mol/L was prepared, wherein the molar ratio of nickel, cobalt and manganese elements in the metal source solution is 8:1:1. During the preparation, nickel sulfate, cobalt sulfate and manganese sulfate were used; a NaOH solution with a concentration of 6 mol/L was prepared; a complexing agent ammonia solution was prepared, in which the concentration of ammonia was 6 mol/L.

The prepared metal source solution, NaOH solution and complexing agent solution to the reaction kettle were added at the same time under stirring to cause a precipitation reaction. An ammonia solution accounting for 30% of the kettle volume was pre-added to the reaction kettle, wherein the concentration of ammonia was 0.5 mol/L. The initial volume flow rate ratio of the metal source solution and the complexing agent solution was controlled to 3, then the flow rate of the metal source solution was kept unchanged, and the feed flow rate of the complexing agent was controlled so that the concentration of the complexing agent in the system is stable at around 0.5 mol/L from the beginning of the reaction to the 16th hour of the reaction, and is stable at around 0.8 mol/L from the 16th hour to the 32nd hour of the reaction, and is stable around 1.1 mol/L within the range from the 32nd hour to the 48th hour of the reaction. The flow rate of the NaOH solution was controlled so that the pH value of the reaction system was maintained near 11.2 throughout the reaction. During the reaction, the stirring speed was 800 rpm, the reaction temperature was 55 °C, and the total reaction time was 48 h. After the precipitation reaction was terminated, it was naturally cooled, and the above slurry was vacuum filtered, washed three times with deionized water, and dried and dehydrated in a vacuum drying oven at 120 °C for 12 hours to obtain the positive electrode material precursor.

(2) Evaluation of positive electrode material precursors

The molar ratio of Ni:Co:Mn: in the obtained positive electrode material precursor was 0.798:0.102:0.100.

The prepared positive electrode material precursor and its inner core layer were subjected to XRD testing according to the method of Example 1. The results showed that the ratio of the intensity of the (110) and (102) crystal planes diffraction peaks in the XRD spectrum of the inner core layer was 0.88, and the ratio of the intensity of the (110) and (102) crystal planes diffraction peaks in the XRD spectrum of the precursor was 0.93.

(3) Preparation and evaluation of positive electrode materials

The positive electrode material and lithium ion battery were prepared according to the method described in Example 1. In the charge-discharge voltage range of 2.5-4.3V, the electrochemical properties of the positive electrode material were measured. The results showed that the first discharge specific capacity at 0.1C rate was 200.2 mAh/g, the Coulombic efficiency in the first week is 88.9%, the discharge specific capacity at 1C rate was 178.6mAh/g, and the capacity retention rate after 100 cycles at 1C rate was 89.7%.

Table 1. Composition and XRD properties of positive electrode material precursors obtained in Examples and Comparative Examples

| | Chemical formula ((OH) part omitted) | Inner core layer I(110)/I(102) | Precursor I(110)/I(102) |
|---|---|---|---|
| Example 1 | $Ni_{0.798}Co_{0.101}Mn_{0.101}$ | 2.93 | 0.86 |
| Example 2 | $Ni_{0.803}CO_{0.151}Al_{0.046}$ | 2.79 | 0.89 |
| Example 3 | $Ni_{0.901}Co_{0.050}Mn_{0.049}$ | 2.82 | 0.97 |
| Example 4 | $Ni_{0.603}CO_{0.198}Mn_{0.199}$ | 2.53 | 0.87 |
| Example 5 | $Ni_{0.797}Co_{0.101}Mn_{0.102}$ | 2.08 | 0.96 |
| Example 6 | $Ni_{0.803}Co_{0.101}Mn_{0.096}$ | 1.94 | 1.04 |
| Example 7 | $Ni_{0.796}Co_{0.103}Mn_{0.101}$ | 2.51 | 1.02 |
| Example 8 | $Ni_{0.795}Co_{0.102}Mn_{0.103}$ | 2.25 | 0.91 |
| Example 9 | $Ni_{0.802}Co_{0.101}Mn_{0.097}$ | 1.62 | 1.23 |
| Example 10 | $Ni_{0.791}Co_{0.102}Mn_{0.107}$ | 1.41 | 1.31 |
| Example 11 | $Ni_{0.796}Co_{0.096}Mn_{0.108}$ | 1.83 | 1.07 |
| Example 12 | $Ni_{0.801}Co_{0.102}Mn_{0.097}$ | 1.72 | 1.11 |
| Example 13 | $Ni_{0.797}Co_{0.101}Mn_{0.102}$ | 1.67 | 1.06 |
| Example 14 | $Ni_{0.801}Co_{0.102}Mn_{0.097}$ | 2.76 | 0.88 |
| Example 15 | $Ni_{0.798}Co_{0.101}Mn_{0.101}Ti_{0.0099}$ | 2.85 | 0.89 |
| Example 16 | $Ni_{0.801}Co_{0.102}Mn_{0.097}Mg_{0.0098}$ | 2.82 | 0.91 |
| Example 17 | $Ni_{0.802}Co_{0.101}Mn_{0.097}B_{0.0095}$ | 2.83 | 0.88 |
| Example 18 | $Ni_{0.803}Co_{0.101}Mn_{0.096}Cr_{0.0097}$ | 3.37 | 1.14 |
| Example 19 | $Ni_{0.801}Co_{0.104}Mn_{0.095}Hf_{0.0099}$ | 2.98 | 1.06 |
| Example 20 | $Ni_{0.802}Co_{0.151}Al_{0.047}Nb_{0.0098}$ | 2.76 | 0.92 |
| Example 21 | $Ni_{0.801}Co_{0.149}Al_{0.050}Ce_{0.0097}$ | 2.77 | 0.93 |
| Example 22 | $Ni_{0.798}Co_{0.151}Al_{0.051}Nd_{0.0095}$ | 2.88 | 0.98 |
| Example 23 | $Ni_{0.803}Co_{0.146}Al_{0.051}F_{0.0087}$ | 2.73 | 0.88 |
| Comparative Example 1 | $Ni_{0.802}Co_{0.101}Mn_{0.097}$ | 0.64 | 0.66 |
| Comparative Example 2 | $Ni_{0.801}Co_{0.103}Mn_{0.096}$ | 0.85 | 0.89 |
| Comparative Example 3 | $Ni_{0.797}Co_{0.101}Mn_{0.102}$ | 0.91 | 0.96 |

(continued)

| | Chemical formula ((OH) part omitted) | Inner core layer I(110) /I(102) | Precursor I(110)/I (102) |
|---|---|---|---|
| Comparative Example 4 | $Ni_{0.798}Co_{0.102}Mn_{0.100}$ | 0.88 | 0.93 |

Table 2. Experimental results of positive electrode materials obtained in Examples and Comparative Examples

| | 0.1C discharge specific capacity mAh/g | Coulomb efficiency % in the first week | ic discharge specific capacity mAh/g | Capacity retention rate % |
|---|---|---|---|---|
| Example 1 | 215.3 | 91.2 | 190.3 | 107.6 |
| Example 2 | 214.7 | 90.8 | 189.7 | 104.9 |
| Example 3 | 225.9 | 90.7 | 201.7 | 97.5 |
| Example 4 | 188.4 | 90.1 | 163.4 | 101.4 |
| Example 5 | 210.4 | 90.8 | 183.7 | 99.4 |
| Example 6 | 209.3 | 90.6 | 182.1 | 98.4 |
| Example 7 | 213.6 | 91.1 | 188.7 | 101.3 |
| Example 8 | 210.9 | 90.9 | 186.2 | 102.5 |
| Example 9 | 204.1 | 90.2 | 179.2 | 93.5 |
| Example 10 | 202.2 | 90.1 | 178.1 | 92.6 |
| Example 11 | 208.8 | 90.5 | 181.8 | 97.3 |
| Example 12 | 207.9 | 90.4 | 180.9 | 97.1 |
| Example 13 | 205.7 | 90.2 | 180.2 | 97.4 |
| Example 14 | 214.3 | 91.1 | 189.4 | 105.4 |
| Example 15 | 214.2 | 92.5 | 189.2 | 102.5 |
| Example 16 | 213.9 | 91.6 | 188.7 | 104.3 |
| Example 17 | 214.1 | 91.3 | 189.2 | 102.3 |
| Example 18 | 219.8 | 94.4 | 196.3 | 98.1 |
| Example 19 | 216.3 | 93 | 196.4 | 98.7 |
| Example 20 | 212.5 | 91.4 | 187.6 | 103.6 |
| Example 21 | 212.7 | 91.8 | 186.5 | 102.5 |
| Example 22 | 214.9 | 92.1 | 189.9 | 99.9 |
| Example 23 | 212.1 | 91.9 | 186.4 | 101.6 |
| Comparative Example 1 | 172.3 | 83.4 | 160.1 | 35.9 |
| Comparative Example 2 | 198.4 | 87.6 | 174.6 | 86.9 |
| Comparative Example 3 | 203.4 | 90.1 | 180.1 | 91.1 |
| Comparative Example 4 | 200.2 | 88.9 | 178.6 | 89.7 |

It can be seen from the above results that the positive electrode material precursor of the present application is different from the precursor of the prior art. Its particles are secondary microspheres formed by agglomeration of flaky primary particles, the microspheres include a three-layer structure from the inside to the outside, namely the inner core layer, the middle layer and the outermost layer. The precursor and its inner core layer have a specific diffraction peak structure. This special structure gives the precursor better electrochemical properties, such as higher discharge specific capacity and better cycle stability, making it suitable for high-performance lithium batteries.

The preferred embodiments of the present application have been described in detail above, however, the present application is not limited to the specific details in the above-mentioned embodiments. Within the scope of the technical concept of the present application, a variety of simple modifications can be made to the technical solutions of the present application, and all these simple modifications fall within the protection scope of the present application.

In addition, it should be noted that each of the specific technical features described in the above-mentioned specific embodiments can be combined in any suitable manner without conflict. In order to avoid unnecessary repetition, various possible combinations will not be described further in this application.

In addition, any combination of various embodiments of the present application can also be carried out, they should also be regarded as the contents disclosed in the present application, as long as they do not violate the idea of the present application.

**Claims**

1.  A lithium battery positive electrode material precursor with the chemical formula $Ni_xCo_yM_zT_p(OH)_q$, in which M is selected from Fe, Cr, Cu, Nd, Ge, Ti, Mg, W, Mo, Nb, Ca, Zn, Sn, Zr, Ga, Mn, Al, V, Sr, Ba, Hf, Ta, Y, La, Ce or combinations thereof, T is selected from F, P, B, N, S or combinations thereof; and $0<x\leq1$, $0\leq y<1$, $0\leq z<1$, $0\leq p\leq0.5$, the value of q makes the above chemical formula satisfy the principle of electrical neutrality, and the positive electrode material precursor contains secondary particles in the form of microspheres formed by agglomeration of primary particles, the microspheres have a three-layer structure from the inside to the outside, namely an inner core layer, a middle layer and an outermost layer, wherein in the XRD diffraction pattern of the inner core layer of the microsphere, the ratio of the intensity of (110) and (102) crystal planes diffraction peaks expressed as peak height is 1.0-8.0, preferably 1.2-4.0, more preferably 1.5-3.5.

2.  The positive electrode material precursor according to claim 1, wherein the ratio of the intensity of the (110) and (102) crystal planes diffraction peaks expressed as peak height in the XRD diffraction pattern of the microsphere is 0.1-1.5, preferably 0.5-1.5, more preferably 0.7-1.3.

3.  The positive electrode material precursor according to any one of the preceding claims, wherein in the chemical formula of positive electrode material precursor:

    M is selected from Fe, Cr, Cu, Ti, Mg, W, Mo, Nb, Ce, Nd, Ca, Zn, Sn, Zr, Ga, Hf, Mn, Al, or combinations thereof, preferably selected from Mn, Al, Ti, Mg, Cr, Hf, Nb, Ce, Nd, or combinations thereof, more preferably Mn, Al, or a combination of at least one of Mn and Al with at least one selected from Ti, Mg, Cr, Hf, Nb, Ce and Nd;
    T is selected from F, P, B, or combinations thereof, more preferably B or F;
    x satisfies $0<x<1$, preferably $0.2<x<1$, more preferably $0.5<x<0.95$;
    y satisfies $0<y<1$, preferably $0<y<0.5$, more preferably $0<y<0.25$;
    z satisfies $0<z<1$, preferably $0<z<0.5$, more preferably $0<z<0.25$;
    p satisfies $0\leq p\leq0.5$, preferably $0\leq p\leq0.3$, more preferably $0\leq p\leq0.1$;
    the value of q makes the above chemical formula satisfy the principle of electrical neutrality.

4.  The positive electrode material precursor according to any one of the preceding claims, wherein the porosity of the inner core layer is in the range of greater than 5% to 15%, and the porosity of the intermediate layer is in the range of 0.01-5%, the porosity of the outermost layer is in the range of 6-30%,

    preferably, the porosities of the inner core layer, the middle layer and the outermost layer of the microsphere satisfies the following relationship: the porosity of the middle layer < the porosity of the inner core layer ≤ the porosity of the outermost layer;
    more preferably, based on the total thickness of the three-layer structure being 100%, the thickness of the inner core layer in the microsphere accounts for 0.1%-50%, the thickness of the middle layer accounts for 40%-95%, and the thickness of the outermost layer accounts for 0.1%-20%;
    particularly preferably, based on the total thickness of the three-layer structure being 100%, the thickness of the inner core layer in the microsphere accounts for 5%-40%, the thickness of the middle layer accounts for 50%-85%, and the thickness of the outermost layer accounts for 1%-15%.

5. The positive electrode material precursor according to any one of the preceding claims, wherein the shape of the primary particles of the positive electrode material precursor is at least one selected from sheet, lath, needle, and spindle, preferably, the primary particles are in the shape of sheet and have a thickness of 1-200 nm.

6. The positive electrode material precursor according to any one of the preceding claims, wherein the particle size D50 of the secondary particles of the positive electrode material precursor is 1-30 $\mu$m, preferably 1-20 $\mu$m, more preferably 1-15 $\mu$m.

7. A method for preparing a lithium battery positive electrode material precursor, wherein the positive electrode material precursor has the chemical formula $Ni_xCo_yM_zT_p(OH)_q$, wherein M is selected from Fe, Cr, Cu, Nd, Ge, Ti, Mg, W, Mo, Nb, Ca, Zn, Sn, Zr, Ga, Mn, Al, V, Sr, Ba, Hf, Ta, Y, La, Ce or combinations thereof, T is selected from F, P, B, N, S or combinations thereof; $0<x\leq1$, $0\leq y<1$, $0\leq z<1$, $0\leq p\leq0.5$, the value of q makes the above chemical formula satisfy the principle of electrical neutrality,

the method includes the step of mixing and reacting a metal source solution, a precipitating agent solution and a complexing agent solution in a reaction vessel, the metal source includes a Ni source, an optional Co source and an optional M source, the metal source solution optionally includes a T source, wherein during the reaction step, the concentration of the complexing agent in the reaction system in the reaction vessel shows an upward trend, while the change rate of the concentration of the complexing agent shows a downward trend;
preferably, during the reaction step, the change rate of the concentration of the complexing agent in the reaction system continues to increase at greater than 0 and less than or equal to 1 mol/L·h, preferably 0.001-1 mol/L·h, more preferably 0.001-0.5 mol/L·h, and at the same time, the change rate of the concentration of the complexing agent continues to decrease.

8. The method according to claim 7, wherein during the reaction step, the change rate of the concentration of the complexing agent and the reaction time t generally satisfy a monotonically decreasing functional relationship;

Preferably, the functional relationship f(t) between the change rate of the concentration of the complexing agent

$$f(t) = \frac{b}{(a+t)^c}$$

and the reaction time t can be expressed as , wherein a>0, b >0, c >1, and the values of a, b and c satisfy $\dfrac{b}{(a)^c} \leq 1$ , the unit of change rate f(t) of the concentration of the complexing agent is mol/L·h, and the unit of reaction time t is h,
more preferably, in the functional relationship, c = 2, $0 < b \leq 5$, $0.5 < a \leq 8$, and the values of a and b satisfy

$$\frac{b}{(a)^2} \leq 1$$
.

9. The method according to claim 7 or 8, wherein the concentration of the complexing agent at the end of the reaction step is controlled in the range of 0.05-2.0 mol/L, preferably in the range of 0.2-1.4 mol/L, more preferably in the range of 0.5-1.2 mol/L;
preferably, the concentration of the complexing agent in the reaction system is controlled to reach 80% of the concentration of the complexing agent at the end of the reaction step within a time period of 0 to 1/4 Tt, wherein Tt is the duration of the reaction step.

10. The method according to any one of claims 7 to 9, wherein within the time period from 0 to 1/8 Tt, the change rate of the concentration of the complexing agent in the reaction system is controlled to be no less than 0.021 mol/L·h; and/or

within the time period from 11/12 Tt to Tt, the change rate of the concentration of the complexing agent in the reaction system is controlled to be lower than 0.005 mol/L·h, where Tt is the duration of the reaction step.

11. The method according to any one of claims 7 to 10, wherein before adding the metal source solution, precipitating agent solution and complexing agent solution to the reaction vessel, water or an aqueous solution containing complexing agent is added to the reaction vessel as the base liquid, wherein:

the concentration of the complexing agent in the bottom liquid is 0-1.8 mol/L, preferably 0.05-1.5 mol/L, further preferably 0.1-1.0 mol/L, and the concentration of the complexing agent in the bottom liquid is lower than the concentration of the complexing agent in the reaction system at end of the reaction step by at least 0.05 mol/L, preferably by at least 0.1 mol/L; and/or
the volume of the bottom liquid is 0-100% of the volume of the reaction vessel, preferably 0-80%, further preferably 10%-60%.

12. The method according to any one of claims 7 to 11, wherein in the chemical formula of the positive electrode material precursor:

M is selected from Fe, Cr, Cu, Ti, Mg, W, Mo, Nb, Ce, Nd, Ca, Zn, Sn, Zr, Ga, Hf, Mn, Al, or combinations thereof, preferably selected from Mn, Al, Ti, Mg, Cr, Hf, Nb, Ce, Nd, or combinations thereof, more preferably selected from Mn, Al, or a combination of at least one of Mn and Al and at least one selected from Ti, Mg, Cr, Hf, Nb, Ce, Ce and Nd;
T is selected from F, P, B, or combinations thereof, more preferably B or F;
x satisfies $0<x<1$, preferably $0.2<x<1$, more preferably $0.5<x<0.95$;
y satisfies $0<y<1$, preferably $0<y<0.5$, more preferably $0<y<0.25$;
z satisfies $0<z<1$, preferably $0<z<0.5$, more preferably $0<z<0.25$;
p satisfies $0\leq p\leq 0.5$, preferably $0\leq p\leq 0.3$, and more preferably $0\leq p\leq 0.1$;
the value of q makes the above chemical formula satisfy the principle of electrical neutrality.

13. The method according to any one of claims 7-12, wherein the metal source is selected from the group consisting of sulfate, nitrate, acetate, oxalate, hydrochloride of the corresponding metal, or combinations thereof;

the precipitating agent is selected from hydroxides, carbonates, bicarbonates of Na, K, Li, or combinations thereof, and/or
the complexing agent is selected from ammonium ion donors, alcoholamine complexing agents, aminocarboxylic acid complexing agents, hydroxylaminocarboxylic acids, carboxylates, thiocyanate complexing agents, or combinations thereof.

14. The method according to any one of claims 7-13, wherein the conditions of the reaction step include: temperature is 20-70 °C, preferably 45-60 °C; pH value is 8-14, preferably 10-12; the stirring speed is 50-1200 r/min, preferably 600-1200 r/min; the duration Tt of the reaction step is not less than 10 hours, preferably 12-96 hours.

15. The method according to any one of claims 7-14, wherein calculated on basis of metal elements, the concentration of the metal source solution is 0.01-5 mol/L, preferably 0.01-4 mol/L;

the concentration of the precipitating agent solution is 0.01-16 mol/L, preferably 2-12 mol/L; and
the concentration of the complexing agent solution is 0.01-16 mol/L, preferably 2-15 mol/L.

16. The method according to any one of claims 7-15, wherein the metal source solution contains a T source, or the method further comprises adding a T source to the reaction system during the reaction step;
preferably, the molar ratio of the nickel source, cobalt source, M source calculated on basis of metal elements and the T source calculated on basis of T element is (0-1): (0-1): (0-1): (0- 0.5), provided that the molar amount of nickel source is not 0, preferably (0.2-1): (0-0.5): (0-0.5): (0-0.3), more preferably (0.5-0.95): (0-0.25): (0-0.25): (0-0.1).

17. The positive electrode material precursor prepared by the method according to any one of claims 7-16.

18. A lithium battery positive electrode material, obtained by the solid phase reaction of the positive electrode material precursor according to any one of claims 1-6 and 17 with a lithium source, preferably, the lithium source is selected from lithium nitrate ($LiNO_3$), lithium chloride (LiCl), lithium carbonate ($Li_2CO_3$), lithium hydroxide (LiOH), lithium oxide

($Li_2O$), lithium phosphate ($Li_3PO_4$), lithium dihydrogen phosphate ($LiH_2PO_4$), lithium acetate ($CH_3COOLi$), or combinations thereof.

19. A lithium battery, comprising a positive electrode, a negative electrode, an electrolyte and a separator, wherein the positive electrode includes the positive electrode material of claim 18.

(1)- inner core layer
(2)- Middle layer
(3)- outmost layer

FIG.1

FIG.2

FIG.3

FIG.4

FIG.5

FIG.6

FIG.7

FIG.8

FIG.9

FIG.10

FIG.11

Cycles

FIG.12

## INTERNATIONAL SEARCH REPORT

| International application No. |
| --- |
| **PCT/CN2022/093054** |

| A. | CLASSIFICATION OF SUBJECT MATTER |
| --- | --- |
| | H01M 4/52(2010.01)i; H01M 4/48(2010.01)i; H01M 10/0525(2010.01)i |

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 正极, 阴极, 活性材料, 前驱体, 镍, Ni, 钴, Co, 核, 中间层, 最外层, 衍射峰, battery, positive electrode, cathode, active material, precursor, nickel, cobalt, core, intermediate layer, outermost layer, diffraction peak

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111370653 A (SHENZHEN BYD LITHIUM BATTERY CO., LTD.) 03 July 2020 (2020-07-03) <br> description, paragraphs 3-65, and figures 1-5 | 1-6, 18-19 |
| Y | CN 111276688 A (JINGMEN GREEN ECO-MANUFACTURE NEW MATERIAL CO., LTD. et al.) 12 June 2020 (2020-06-12) <br> description, paragraphs 9-95, and figures 1-4 | 1-6, 18-19 |
| Y | CN 111943285 A (ZHEJIANG POWER NEW ENERGY CO., LTD.) 17 November 2020 (2020-11-17) <br> description, paragraphs 5-44, and figures 1-4 | 1-6, 18-19 |
| A | CN 112086616 A (SICHUAN ENGINEERING TECHNICAL COLLEGE) 15 December 2020 (2020-12-15) <br> entire document | 1-19 |
| A | JP 2020176051 A (SUMITOMO METAL MINING CO., LTD.) 29 October 2020 (2020-10-29) <br> entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 July 2022** | **26 July 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/093054** |

| Patent document cited in search report | | | Publication date (day/month/year) | Patent family member(s) | | | Publication date (day/month/year) |
| --- | --- | --- | --- | --- | --- | --- | --- |
| CN | 111370653 | A | 03 July 2020 | None | | | |
| CN | 111276688 | A | 12 June 2020 | CN | 111276688 | B | 19 February 2021 |
| CN | 111943285 | A | 17 November 2020 | None | | | |
| CN | 112086616 | A | 15 December 2020 | None | | | |
| JP | 2020176051 | A | 29 October 2020 | None | | | |

Form PCT/ISA/210 (patent family annex) (January 2015)

**REFERENCES CITED IN THE DESCRIPTION**

**Patent documents cited in the description**

- CN 202110545464
- CN 107915263 A